# EUROPÄISCHE PATENTSCHRIFT

(11) **EP 0 705 870 B1**
(45) Veröffentlichungstag und Bekanntmachung des Hinweises auf die Patenterteilung: **17.11.1999**
(21) Anmeldenummer: 95810566.0
(22) Anmeldetag: 13.09.1995
(51) Int. Cl.: C08K 5/00

(54) **Stabilisatoren für organische Materialien**
Stabilisers for organic materials
Stabiliseurs pour des matériaux organiques

(30) Priorität: 22.09.1994 CH 288994
(43) Veröffentlichungstag der Anmeldung: 10.04.1996
(73) Patentinhaber: Ciba Specialty Chemicals Holding Inc., 4057 Basel (CH)
(72) Erfinder: Evans, Samuel, Dr., CH-1723 Marly (CH); Allenbach, Stephan, CH-3186 Düdingen (CH)

(56) Entgegenhaltungen:
- EP-A- 0 348 744
- DE-B- 1 235 894

## Beschreibung

Die vorliegende Erfindung betrifft Zusammensetzungen, enthaltend ein oxidativem, thermischem oder/und actinischem Abbau unterliegendes organisches Material und mindestens eine Verbindung der unten beschriebenen Formel I. Weitere Gegenstände der Erfindung sind die Verwendung dieser Verbindungen als Additive zur Stabilisierung von organischem Material sowie neue Verbindungen der Formel I.

Strukturell ähnliche Verbindungen wurden bereits verschiedentlich als pharmazeutische Mittel beschrieben. [s.z.B. D. Lednicer et al., J. Med. Chem **9**,172 (1966), D. Lednicer et al., Chem. Ind. **1963**, 408, und W.L. Bencze et al. J. Med. Chem. 8, 213, (1965)].

In US 4,315,850 werden Verbindungen mit Phenylalkenyl-Gruppen als ABS-Hitzestabilisatoren genannt. Ein Beispiel ist die Verbindung der Formel

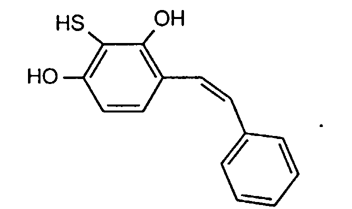

Die dort beschriebenen Verbindungen tragen stets am Phenylring eine SH-Gruppe.

Im Vorliegenden werden nun Verbindungen der Formel I in Zusammensetzungen mit organischen Materialien zur Verbesserung von deren Stabilität und Verarbeitbarkeit vorgeschlagen. Weiterhin wurden neue Verbindungen der Formel I aufgefunden, die sich ebenfalls ausgezeichnet zum Schutz von organischem Material vor thermischem, oxidativem oder/und actinischem Abbau eignen.

Gegenstand der vorliegenden Erfindung sind somit Zusammensetzungen enthaltend ein thermischem, oxidativem und/oder actinischem Abbau unterliegendes organisches Material und mindestens eine Verbindung der Formel (I) 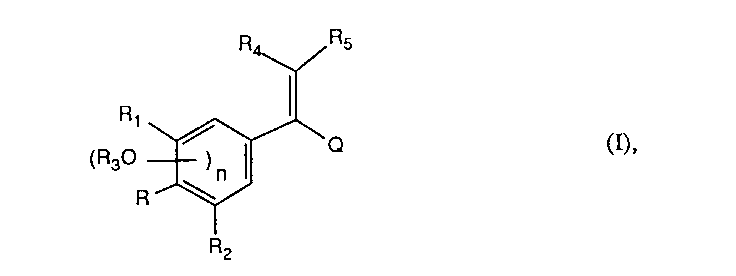 worin
Q einen Rest 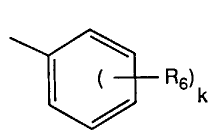 darstellt, wobei
n 1 oder 2 und k 0, 1 oder 2 sind,
oder Q zusammen mit R₅ eine Gruppe 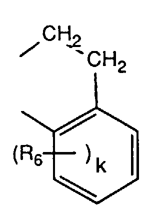 bildet und n 1 ist,
R Wasserstoff ist, dieselben Bedeutungsmöglichkeiten wie R₃O hat oder, wenn R₃ Wasserstoff und n 1 ist, zusammen mit R₁ oder mit R₂ eine Gruppe 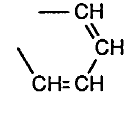 bildet,
R₁ Wasserstoff, C₁-C₁₈-Alkyl, C₅-C₁₂-Cycloalkyl, Phenyl, Benzyl, α-Methylbenzyl, α,α-Dimethylbenzyl oder Diphenylmethyl ist,
oder einen Rest der Formel 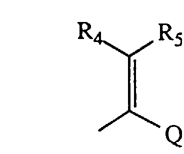 oder eine Gruppe der Formel 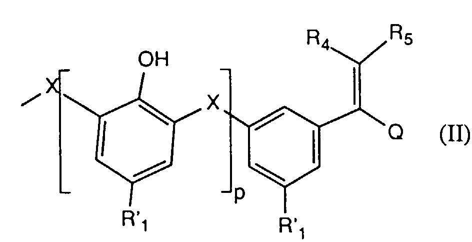 darstellt,
R'₁ C₁-C₁₈-Alkyl, Benzyl, α-Methylbenzyl oder α,α-Dimethylbenzyl ist,
X eine direkte Bindung oder eine Gruppe >CR₁₇R₁₈ oder (-S-)ₘ ist,
p 0 bis 8 und m 1 bis 3 sind,
R₂ Wasserstoff, C₁-C₁₈-Alkyl, Phenyl, C₅-C₁₂-Cycloalkyl, Benzyl, α-Methylbenzyl, α,α-Dimethylbenzyl oder Diphenylmethyl ist
oder eine Gruppe der Formel 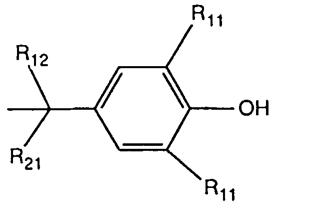 oder der Formel 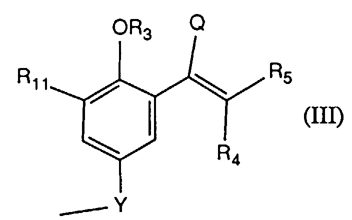 darstellt,
Y >CR₁₉R₂₀, >S oder >C(CH₃)-(CH₂)_{q}-E-R₉ bedeutet,
q 1 oder 2 ist und
E für CO-O oder O-CO steht,
oder R₂ C_{b}H_{2b}-D-R₁₀ und b 0 bis 3 ist,
D für CO-O, O-CO, NH-CO oder CO-NH steht,
oder R₂ einen Rest der Formel 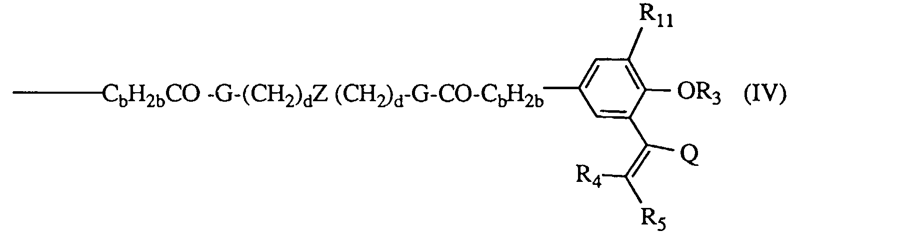 darstellt,
G für -O- oder >NH steht,
d 2 oder 3 ist,
Z eine direkte Bindung, -O-, >NR₂₂ oder -S- ist,
oder R₂ eine Gruppe der Formel IVa 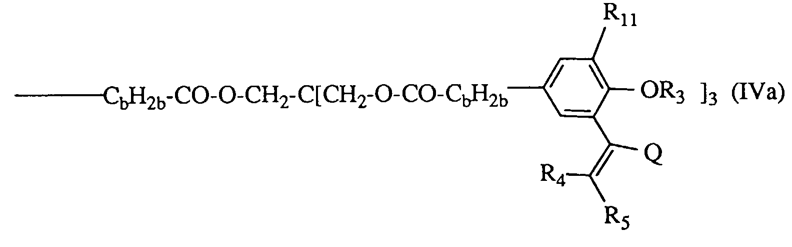 ist,
R₃ Wasserstoff, C₁-C₁₈-Alkyl, C₅-C₁₂-Cycloalkyl, Phenyl, Benzyl, α-Methylbenzyl, α,α-Dimethylbenzyl, Diphenylmethyl oder -CO-R₈,
oder eine Gruppe der Formel 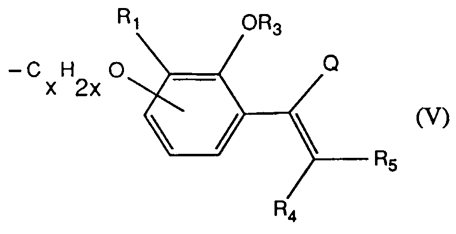 darstellt,
x 2 bis 10 ist,
R₄ und R₅ unabhängig voneinander Wasserstoff, C₁-C₁₂-Alkyl, C₅-C₁₂-Cycloalkyl, Phenyl, Benzyl, α-Methylbenzyl oder α,α-Dimethylbenzyl sind,
R₆ -NO₂, -C≡N, -COOR₁₃, -S-R₁₄, -SOR₁₄, -SO₂-R₁₄, -NR₇R₇ₐ, Cl, Br, F, -OR₁₅, oder -COR₁₆ ist, oder 2 Reste R₆ zusammen einen ankondensierten Benzoring bilden,
R₇ und R₇ₐ unabhängig voneinander Wasserstoff oder C₁-C₁₂-Alkyl sind,
R₈ Wasserstoff, C₁-C₁₈-Alkyl, Phenyl oder C₂-C₃-Alkenyl ist,
R₉ Wasserstoff, C₁-C₁₈-Alkyl oder eine Gruppe der Formel 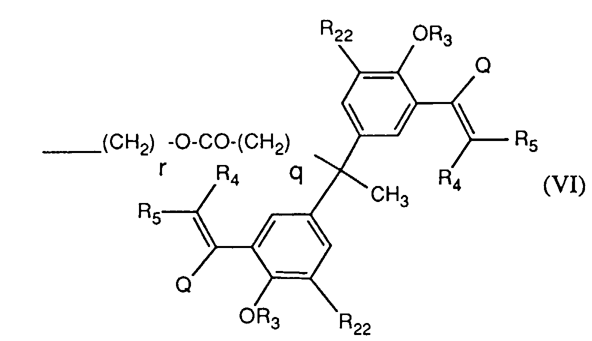 darstellt,
r für 2 bis 6 steht und q 1 oder 2 ist,
R₁₀ Wasserstoff oder C₁-C₁₈-Alkyl ist,
R₁₁ C₁-C₁₂-Alkyl, Phenyl, C₅-C₁₂-Cycloalkyl, Benzyl, α-Methylbenzyl oder α,α-Dimethylbenzyl ist,
R₁₂ Wasserstoff oder Methyl darstellt,
R₁₃ Wasserstoff oder C₁-C₁₈-Alkyl ist,
R₁₄ C₁-C₈-Alkyl oder Phenyl ist,
R₁₅ Wasserstoff, C₁-C₁₈-Alkyl, Phenyl, C₅-C₁₂-Cycloalkyl, Benzyl, α-Methylbenzyl oder α,α-Dimethylbenzyl ist,
R₁₆ C₁-C₁₈-Alkyl, Phenyl, C₅-C₆-Cycloalkyl, Acryloyl, Methacryloyl, Benzyl, α-Methylbenzyl oder α,α-Dimethylbenzyl ist,
R₁₇ und R₁₈ unabhängig voneinander Wasserstoff, C₁-C₁₈-Alkyl oder Phenyl sind,
R₁₉ Wasserstoff, C₁-C₁₈-Alkyl oder Phenyl ist,
R₂₀ Wasserstoff, C₁-C₁₈-Alkyl oder Phenyl ist,
R₂₁ Wasserstoff oder Methyl ist, und
R₂₂ Wasserstoff, C₁-C₁₈-Alkyl, C₅-C₁₂-Cycloalkyl oder Phenyl ist.

In zweckmäßigen Zusammensetzungen sind Verbindungen der Formel I, wie oben beschrieben, enthalten, worin jedoch
R₁ Wasserstoff, C₁-C₁₂-Alkyl, Cyclohexyl, Phenyl, Benzyl, α-Methylbenzyl, α,α-Dimethylbenzyl oder eine Gruppe der Formel II darstellt,
X eine Gruppe >CHR₁₇ oder -S- ist,
p 0 bis 4 ist,
R'₁ C₁-C₁₂-Alkyl ist
R₂ Wasserstoff, C₁-C₈-Alkyl, Cyclohexyl, Benzyl, α-Methylbenzyl, α,α-Dimethylbenzyl oder Phenyl ist,
oder ein Rest der Formel III ist,
Y für -S- oder >CR₁₉R₂₀, >C(CH₃)-CH₂-CO-R₉ steht,
oder R₂ für einen Rest der Formel IV steht, Z = -O- oder -S- und d = 2 sind,
oder R₂ für -(CH₂)₂-CO-OR₁₀ steht,
R₃ Wasserstoff, C₁-C₈-Alkyl, Phenyl, -CO-R₈ oder
ein Rest der Formel V ist, worin R₁ Wasserstoff bedeutet,
x 2 bis 6 ist,
R₄ und R₅ unabhängig voneinander Wasserstoff, C₁-C₈-Alkyl, Phenyl, Benzyl, α-Methylbenzyl oder α,α-Dimethylbenzyl sind,
R₆ -NO₂, -C≡N, -COOR₁₃, -CO-R₁₆, -SO-R₁₄, -SO₂-R₁₄, oder Fluor ist,
R₈ C₁-C₈-Alkyl oder Phenyl,
R₉ C₁-C₁₈-Alkyl,
R₁₀ Wasserstoff oder C₁-C₁₈-Alkyl,
R₁₁ C₁-C₄-Alkyl,
R₁₃ C₁-C₁₂-Alkyl,
R₁₄ C₄-C₈-Alkyl oder Phenyl,
R₁₇ Wasserstoff, C₁-C₄-Alkyl oder Phenyl,
R₁₉ Wasserstoff oder C₁-C₄-Alkyl und
R₂₀ Wasserstoff oder C₁-C₄-Alkyl sind.

Ebenfalls als zweckmäßig sind Zusammensetzungen zu betrachten, worin mindestens eine der Gruppen R₃O Hydroxy bedeutet; ferner Zusammensetzungen, worin ein Rest R₃O in ortho-Position zur Alkenylgruppe zu finden ist; und besonders Zusammensetzungen, worin n 1 ist und R₃O für OH steht und in ortho-Position zur Alkenylgruppe steht.

Bevorzugte Zusammensetzungen enthalten Verbindungen der Formel I, worin R die gleichen Bedeutungsmöglichkeiten wie R₃O hat oder Wasserstoff ist, R₁ Wasserstoff, C₁-C₁₂-Alkyl, Benzyl oder α-Methylbenzyl ist oder einem Rest der Formel 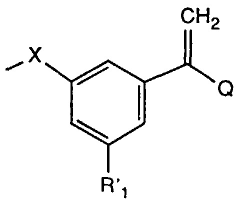 entspricht,
X -CH₂ oder -S- ist,
R'₁ C₁-C₄-Alkyl ist,
R₂ für H, C₁-C₈-Alkyl, Benzyl, α-Methylbenzyl oder einen Rest der Formel -(CH₂)₂-CO-OR₁₀ steht
R₁₀ C₁-C₁₈-Alkyl ist,
R₃ Wasserstoff CO-C₁-C₄-Alkyl oder C₁-C₁₈-Alkyl ist oder der Formel 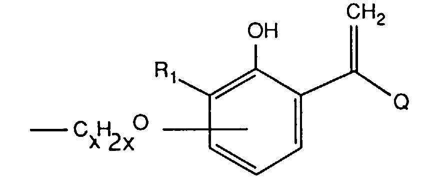 entspricht,
x 2 bis 6 ist,
R₄ Wasserstoff ist,
R₅ Wasserstoff, Ethyl, Methyl oder Benzyl ist, und
R₆ NO₂, S-Phenyl oder SO₂-Phenyl ist.

Besonders bevorzugte Zusammensetzungen enthalten Verbindungen der Formel I, worin R für Wasserstoff, -O-C₁-C₁₂-Alkyl oder einen Rest der Formel 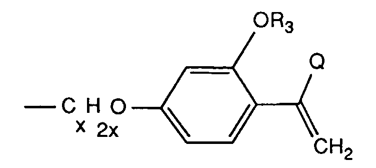 steht
R₁ Wasserstoff oder C₁-C₁₂-Alkyl ist,
R₂ Wasserstoff oder C₁-C₈-Alkyl ist,
R₄ und R₅ Wasserstoff sind,
x 2 bis 6 ist,
n 1 ist und
R₃ für Wasserstoff oder -CO-C₁-C₁₂-Alkyl steht.

In den Verbindungen der Formel I sind vorzugsweise nur eine oder zwei, insbesondere nur eine der Gruppen der Formeln II, III, IV, IVa, V und VI vorhanden.

Wenn Reste in obigen Formeln C₁-C₁₈- oder C₁-C₂₂-Alkyl darstellen, handelt es sich dabei um verzweigte oder unverzweigte Reste. Beispiele hierfür sind Methyl, Ethyl, Propyl, Isopropyl, n-Butyl, Isobutyl, t-Butyl, Pentyl, Isopentyl, Hexyl, Heptyl, 3-Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl oder 1-Methylundecyl; die Reste weisen dabei vorzugsweise 1-12, insbesondere 1-8 C-Atome auf. Weitere Alkylgruppen in obigen Formeln weisen die gleichen beispielhaften Bedeutungen bis zur entsprechenden Zahl der C-Atome auf.

Bedeuten Substituenten in Formel I Halogen, ist darunter Cl, Br, F und J, insbesondere F, Cl und Br, vor allem F, zu verstehen.

Für C₅-C₁₂-Cycloalkyl stehende Reste können z.B. Cyclopentyl, Cyclohexyl, Cycloheptyl, Cyclooctyl oder Cyclododecyl sein. Cyclopentyl und Cyclohexyl sind bevorzugt, insbesondere Cyclohexyl.

C₂-C₃-Alkenyl ist z.B. Vinyl oder Allyl.

Die Besonderheit von organischen Stoffen liegt im Gegensatz zu den meist bis zu hohen Temperaturen stabilen anorganischen Stoffen darin, daß sie sich vergleichsweise leicht unter Einfluß von Wärme, Licht bzw. Strahlung, mechanischer Belastung (insbesondere durch Scherkräfte) und chemischen Reagentien (besonders Luftsauerstoff) zersetzen.

Dem Schutz vor solchen Einflüssen dienen die Verbindungen der Formel I, die in den erfindungsgemäßen Zusammensetzungen zweckmäßig zu 0.01 bis 10, beispielsweise zu 0.05 bis 5, vorzugsweise zu 0.05 bis 3, insbesondere jedoch zu 0.1 bis 2 Gew.-% in den organischen Materialien vorliegen sollen. Es kann sich dabei um eine oder mehrere dieser Verbindungen handeln, und die Gewichtsprozentangaben beziehen sich auf die gesamte Menge dieser Verbindungen. Berechnungsgrundlage ist dabei das Gesamtgewicht des organischen Materials ohne die Verbindungen der Formel I.

Die in den erfindungsgemäßen Zusammensetzungen enthaltenen Materialien sind solche, die gegen oxidativen, thermischen oder/und actinischen Abbau empfindlich sind. Als nicht unter diese organischen Materialien fallend sind lebende Organismen zu verstehen.

Beispielhaft für organische Materialien, die erfindungsgemäß mit Hilfe der Verbindungen der Formel I stabilisiert werden können, seien erwähnt:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acryl-nitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd-und Melamin-Formaldehydharze.
22. Trocknende und nicht-trocknende Alkydharze.
23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
29. Natürliche und synthetische organische Stoffe, die reine monomere Verbindungen oder Mischungen von solchen darstellen, beispielsweise Mineralöle, tierische oder pflanzliche Fette, Öle und Wachse, oder Öle, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wäßrige Emulsionen.
30. Wäßrige Emulsionen natürlicher oder synthetischer Kautschuke, wie z.B. Naturkautschuk-Latex oder Latices von carboxylierten Styrol-Butadien-Copolymeren.

Die Einarbeitung in die Materialien kann beispielsweise durch Einmischen oder Aufbringen der Verbindungen der Formel I und gegebenenfalls weiterer Additive nach den in der Technik üblichen Methoden erfolgen. Handelt es sich um Polymere, insbesondere synthetische Polymere, kann die Einarbeitung vor oder während der Formgebung, oder durch Aufbringen der gelösten oder dispergierten Verbindungen auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der Verbindungen der Formel I in Polymere besteht in deren Zugabe vor, während oder unmittelbar nach der Polymerisation der entsprechenden Monomeren bzw. vor der Vernetzung. Die Verbindungen der Formel I können dabei als solche, aber auch in encapsulierter Form (z.B in Wachsen, Ölen oder Polymeren) zugesetzt werden. Im Falle der Zugabe vor oder während der Polymerisation können die Verbindungen der Formel I auch als Regulatoren für die Kettenlänge der Polymeren (Kettenabbrecher) wirken.

Die Verbindungen der Formel I oder Mischungen davon können auch in Form eines Masterbatches, der diese Verbindungen beispielsweise in einer Konzentration von 2.5 bis 25 Gew.-% enthält, den zu stabilisierenden Kunststoffen zugesetzt werden.

Zweckmäßig kann die Einarbeitung der Verbindungen der Formel I nach folgenden Methoden erfolgen:
- als Emulsion oder Dispersion (z.B. zu Latices oder Emulsionspolymeren)
- Als Trockenmischung während des Vermischens von Zusatzkomponenten oder Polymermischungen
- durch direktes Zugeben in die Verarbeitungsapparatur (z.B. Extruder, Innenmischer usw.)
- als Lösung oder Schmelze.

Erfindungsgemäße Polymerzusammensetzungen können in verschiedener Form angewandt bzw. zu verschiedenen Produkten verarbeitet werden, z.B. als (zu) Folien, Fasern, Bändchen, Formmassen, Profilen, oder als Bindemittel für Lacke, Klebstoffe oder Kitte.

Die erfindungsgemäßen Zusammensetzungen enthalten als organisches Material vorzugsweise einen Schmierstoff, eine Metallbearbeitungsflüssigkeit, eine Hydraulikflüssigkeit, ein natürliches, halbsynthetisches oder synthetisches Polymer. Bevorzugt sind halogenfreie Polymere. Besonders bevorzugt sind Zusammensetzungen, die einen halogenfreien thermoplastischen Kunststoff oder ein Elastomer enthalten. Gemäß einer weiteren bevorzugten Ausführungsform ist das organische Material ein Polyolefin. Beispiele für solche Polymere sind der vorstehenden Aufzählung von geeigneten Materialien zu entnehmen.

Ebenfalls bevorzugt sind Zusammensetzungen, die als organisches Material einen Schmierstoff, eine Metallbearbeitungsflüssigkeit oder eine Hydraulikflüssigkeit, insbesondere einen Schmierstoff, enthalten.

Die Erfindung betrifft auch ein Verfahren zum Stabilisieren von organischem Material, insbesondere von thermoplastischen Polymeren, Elastomeren oder Schmierstoffen, Hydraulik- oder Metallbearbeitungsflüssigkeiten, vor allem von Schmierstoffen, gegen oxidativen, thermischen und/oder lichtinduzierten Abbau, dadurch gekennzeichnet, daß man diesem Material als Stabilisatoren Verbindungen der Formel I zusetzt bzw. auf dieses aufbringt.

Die Verbindungen der Formel I sind beispielsweise geeignet, um Schmierstoffen, Hydraulik- oder Metallbearbeitungsflüssigkeiten verbesserte Gebrauchseigenschaften zu verleihen. Deshalb umfaßt die Erfindung auch Zusammensetzungen, enthaltend eine Schmierstoff, Hydraulik- oder Metallbearbeitungsflüssikeit und wenigstens eine Verbindung der allgemeinen Formel I, wie oben beschrieben.

Die in Frage kommenden Schmierstoffe basieren beispielsweise auf mineralischen oder synthetischen Ölen oder Mischungen davon oder auf pflanzlichen und tierischen Ölen, Fetten und Wachsen. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Schmierstoffe sind insbesondere Öle und Fette, beispielsweise basierend auf einem Mineralöl. Bevorzugt sind Öle.

Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-α-olefine oder der Silicone, eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropan-tricaprylat oder Gemische davon, eines Tetraesters von Pentaerythrit mit einer einwertigen Säure oder mit einem Gemisch solcher Säuren, wie z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure oder von einem Gemisch davon. Besonders geeignet sind neben Mineralölen z.B. Poly-α-Olefine, Schmierstoffe auf Esterbasis, Phosphate, Glykole, Polyglykole und Polyalkylenglykole, sowie deren Mischungen mit Wasser.

Als pflanzliche Schmierstoffe sind die Öle, Fette und Wachse, gewonnen beispielsweise aus Oliven, Palmen, Palmkernen, Rüben, Raps, Leinen, Nüssen, Soja, Baumwolle, Ricinus, Sonnenblumen, Kürbiskernen, Kokos, Mais oder deren modifizierte Formen, z.B. geschwefelte oder epoxidierte Öle, wie epoxidiertes Sojaöl, sowie Mischungen der Substanzen zu nennen. Beispiele für tierische Öle, Fette und Wachse, die als Schmierstoffe angewandt werden können, sind Talge, Fischöle, Spermöl, Klauenöl, Trane und Specköle, deren modifizierte Formen und Mischungen.

Metallbearbeitungsflüssigkeiten wie Walz-, Zieh- und Schneidöle basieren zumeist auf den oben beschriebenen Mineral- und synthetischen Ölen und können auch als Öl-in-Wasser- bzw. Wasser-in-Öl-Emulsionen vorliegen. Das gleiche gilt für Hydraulikflüssigkeiten. Als weitere Schmierstoffe, Hydraulik- und Metallbearbeitungsflüssigkeiten kommen z.B. Kompressoröle und Spinnpräparationen in Frage.

Die Verbindungen der Formel I, wie oben beschrieben, können z.B. in Mengen von 0.01 bis 10 Gew.-%, zweckmäßig in Mengen von 0.05 bis 5 Gew.-%, vorzugsweise in einer Menge von 0.05 bis 3 Gew.-% und ganz besonders bevorzugt von 0.5 bis 1.5 Gew.-%, bezogen auf die Zusammensetzung, in dem Schmierstoff, oder der Hydraulik- oder Metallbearbeitungsflüssigkeit vorliegen.

Die Verbindungen der Formel I können den Schmierstoffen, Hydraulik- und Metallbearbeitungsflüssigkeiten auf an sich bekannte Weise beigemischt werden. Die Verbindungen sind beispielsweise in Ölen gut löslich. Es ist auch möglich, einen sogenannten Masterbatch herzustellen, der nach Maßgabe des Verbrauchs auf Einsatzkonzentrationen mit dem entsprechenden Smierstoff oder der entsprechenden Hydraulik- oder Metallbearbeitungsflüssigkeit verdünnt werden kann.

Zusätzlich zu den erfindungsgemäßen Verbindungen bzw. Mischungen können die erfindungsgemäßen Zusammensetzungen, insbesondere wenn sie organische, vorzugsweise synthetische, Polymere enthalten, noch weitere übliche Additive enthalten. Beispiele für solche Additive sind:
1. Antioxidantien
   1.1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkyliene Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
   1.4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
   1.5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyi-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
   1.6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-ditert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.
   1.7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di[4-(1,1,3,3-tetramethylbutyl)-phenyl]-2,2-bis-(3,5-di-tert-butyl-4-hydroxybenzyl)-malonat.
   1.8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
   1.10. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.12. Ester der β-(3,5-Di-tert-butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert-Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-ditert-butyl-4-hydroxyphenylpropionyl)-hydrazin.
2. UV-Absorber und Lichtschutzmittel
   2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzbenzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R-CH₂CH₂-CO-O-(CH₂)₃]₂ mit R = 3'-tert-Butyl-4'-hydroxy-5'-2H-benzotriazol-2-yl-phenyl.
   2.2.2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   2.7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-ten-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2'4-Bis(2-hydroxy-4-propyloxyphenyl)-6-(2'4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-di-methylphenyl)-1,3,5-triazin, 2-[2-hydroxy-4-(2-hydroxy-3-octyloxy-propyloxy)phenyl]-4,-6-bis(2'4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearylsorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Iodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
8. Nukleierungsmittel, wie z.B. 4-tert-Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.
10. Sonstige Zusätze, wie z.B. Weichmacher, Gleitmittel, Emulgatoren, Pigmente, Optische Aufheller, Flammschutzmittel, Antistatika, Treibmittel.
11. Benzofuranone bzw. Indolinone, wie z.B. in US-A-4 325 863, US-A-4 338 244 oder US-A-5 175 312 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis-[5,7-di-tert-butyl-3-(4-[2-hydroxyethoxy]phenyl)-benzofuran2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Handelt es sich bei den erfindungsgemäßen Zusammensetzungen um solche auf Basis von Schmierstoffen und Hydraulikflüssigkeiten bzw. Metallbearbeitungsflüssigkeiten, können diese ebenfalls weitere Additive enthalten, die zugegeben werden, um gewisse Gebrauchseigenschaften zu verbessern, wie z.B. weitere Antioxidantien, Metalldesaktivatoren, Rostinhibitoren, Viskositäts-Index-Verbesserer, Stockpunkterniedriger, Dispergiermittel/Tenside und Verschleißschutzadditive. Beispiele hierfür sind:
Beispiele für phenolische Antioxidantien: Solche können den vorstehenden Punkten 1.1. bis 1.16 entnommen werden.
Beispiele für aminische Antioxidantien:
   N,N'-Di-isopropyl-p-phenylendiamin, N,N'-Di-sec-butyl-p-phenylendiamin, N,N'-Bis(1,4-dimethyl-pentyl)-p-phenylendiamin, N'N-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methylphenol, 2,4'-Diamino-diphenylmethan, 4,4'-Diamino-diphenylmethan, N,N,N',-N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, N-Allylphenothiazin, N,N,N',N'-Tetraphenyl-1,4-diaminobut-2-en, N,N-Bis-(2,2,6,6-tetramethyl-piperidin-4-yl)hexamethylendiamin, Bis-(2,2,6,6-tetramethylpiperidin-4-yl)-sebacat, 2,2,6,6-Tetramethylpiperidin-4-on, 2,2,-6,6-Tetramethylpiperidin-4-ol.
Beispiele für weitere Antioxidantien:
   Aliphatische oder aromatische Phosphite, Ester der Thiodipropionsäure oder der Thiodiessigsäure, oder Salze der Dithiocarbamid- oder Dithiophosphorsäure, 2,2,12,12-Tetramethyl-5,9-dihydroxy-3,7,11-trithiatridecan und 2,2,15,15-Tetramethyl-5,12-dihydroxy-3,7,10,14-tetrathiahexadecan.
Beispiele für Metall-Desaktivatoren, z.B. für Kupfer, sind:
   a) Benzotriazole und deren Derivate, z.B. 4- oder 5-Alkylbenzotriazole (z.B. Tolutriazol) und deren Derivate, 4,5,6,7-Tetrahydrobenzotriazol, 5,5'-Methylenbis-benzotriazol; Mannich-Basen von Benzotriazol oder Tolutriazol wie 1-[Di(2-ethylhexyl)aminomethyl)-tolutriazol und 1-[Di(2-ethylhexyl)aminomethyl)-benzotriazol; Alkoxyalkylbenzotriazole wie 1-(Nonyloxymethyl)-benzotriazol, 1-(1-Butoxyethyl)-benzotriazol und 1-(1-Cyclohexyloxybutyl)-tolutriazol.
   b) 1,2,4-Triazole und deren Derivate, z.B. 3-Alkyl (oder Aryl)- 1,2,4-Triazole, Mannich-Basen von 1,2,4-Triazolen wie 1-[Di(2-ethylhexyl)aminomethyl-1,2,4-triazol; Alkoxyalkyl-1,2,4-triazole wie 1-(1-Butoxyethyl)-1,2,4-triazol; acylierte 3-Amino-1,2,4-triazole.
   c) Imidazolderivate, z.B. 4,4'-Methylenbis(2-undecyl-5-methylimidazol), Bis[(N-methyl)imidazol-2-yl]carbinol-octylether.
   d) Schwefelhaltige heterocyclische Verbindungen, z.B. 2-Mercaptobenzthiazol, 2,5-Dimercapto-1,3,4-thiadiazol und deren Derivate; 3,5-Bis [di(2-ethylhexyl)amino-methyl]-1,3,4-thiadiazolin-2-on.
   e) Aminoverbindungen, z.B. Salicyliden-propylendiamin, Salicylaminoguanidin und deren Salze.
Beispiele für Rost-Inhibitoren sind:
   a) Organische Säuren, ihre Ester, Metallsalze, Aminsalze und Anhydride, z.B. Alkyl- und Alkenylbernsteinsäuren und deren Partialester mit Alkoholen, Diolen oder Hydroxycarbonsäuren, Partialamide von Alkyl- und Alkenylbernsteinsäuren, 4-Nonylphenoxyessigsäure, Alkoxy- und Alkoxyethoxycarbonsäuren wie Dodecyloxyessigsäure, Dodecyloxy(ethoxy)-essigsäure und deren Aminsalze, ferner N-Oleoyl-sarcosin, Sorbitan-mono-oleat, Blei-naphthenat, Alkenylbernsteinsäureanhydride, z.B. Dodecenylbernsteinsäure-anhydrid, 2-Carboxymethyl-1-dodecyl-3-methylglycerin und dessen Aminsalze.
   b) Stickstoffhaltige Verbindungen, z.B.:
      i. Primäre, sekundäre oder tertiäre aliphatische oder cycloaliphatische Amine und Aminsalze von organischen und anorganischen Säuren, z.B. öllösliche Alkylammoniumcarboxylate, ferner 1-[N,N-bis-(2-hydroxyethyl)amino]-3-(4-nonylphenoxy)propan-2-ol.
      ii. Heterocyclische Verbindungen, z.B.:
         Substituierte Imidazoline und Oxazoline, 2-Heptadecenyl-1-(2-hydroxyethyl)-imidazolin.
   c) Phosphorhaltige Verbindungen, z.B.:
      Aminsalze von Phosphorsäurepartialestern oder Phosphonsäurepartialestern, Zinkdialkyldithiophosphate.
   d) Schwefelhaltige Verbindungen, z.B.:
      Barium-dinonylnaphthalin-sulfonate, Calciumpetroleum-sulfonate, Alkylthio-substituierte aliphatische Carbonsäuren, Ester von aliphatischen 2-Sulfocarbonsäuren und deren Salze.
   e) Glycerinderivate, z.B.:
      Glycerin-monooleat, 1-(Alkylphenoxy)-3-(2-hydroxyethyl)glycerine, 1-(Alkylphenoxy)-3-(2,3-dihydroxypropyl)glycerine, 2-Carboxyalkyl-1,3-dialkylglycerine.
Beispiele für Viskositätsindex-Verbesserer sind:
   Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.
Beispiele für Stockpunkterniedriger sind:
   Polymethacrylat, alkylierte Naphthalinderivate.
Beispiele für Dispergiermittel/Tenside sind:
   Polybutenylbernsteinsäureamide oder -imide, Polybutenylphosphonsäurederivate, basische Magnesium-, Calcium-, und Bariumsulfonate und -phenolate.
Beispiele für Verschleißschutz-Additive sind:
   Schwefel und/oder Phosphor und/oder Halogen enthaltende Verbindungen, wie geschwefelte Olefine und pflanzliche Öle, Zinkdialkyldithiophosphate, alkylierte Triphenylphosphate, Tritolylphosphat, Tricresylphosphat, chlorierte Paraffine, Alkyl- und Aryldi- und tri-sulfide, Aminsalze von Mono- und Dialkylphosphaten, Aminsalze der Methylphosphonsäure, Diethanolaminomethyltolyltriazol, Di-(2-ethylhexyl)aminomethyltolyltriazol, Derivate des 2,5-Dimercapto-1,3,4-thiadiazols, 3-[(Bis-isopropyloxy-phosphinothioyl)thio]-propionsäure-ethylester, Triphenylthiophosphat (Triphenylphosphorothioat), Tris(alkylphenyl)phosphorothioate und deren Gemische, (z.B. Tris(isononylphenyl)phosphorothioat), Diphenyl-monononylphenyl-phosphorothioat, Isobutylphenyl-diphenyl-phosphorothioat, Dodecylaminsalz des 3-Hydroxy-1,3-thiaphosphetan-3-oxids, Trithiophosphorsäure-5,5,5-tris[isooctylacetat (2)], Derivate von 2-Mercaptobenzthiazol wie 1-[N,N-Bis(2-ethylhexyl)aminomethyl-2-mercapto- 1H-1,3-benzothiazol, Ethoxycarbonyl-5-octyl-dithiocarbamat.

Die vorliegende Erfindung betrifft auch die Verwendung von Verbindungen der Formel I zum Stabilisieren von gegen oxidativen, thermischen und/oder lichtinduzierten Abbau empfindlichem organischem Material, insbesondere von natürlichen oder (halb)synthetischen Polymeren oder von Schmierstoffen, Hydraulik- oder Metallbearbeitungsflüssigkeiten, vor allem von Schmierstoffen.

Die Erfindung besteht demzufolge auch in einem Verfahren zum Stabilisieren organischen Materials, insbesondere von Schmierstoffen, Metallbearbeitungs- und Hydraulikflüssigkeiten sowie natürlichen, synthetischen oder halbsynthetischen Polymeren, dadurch gekennzeichnet, daß man diesem Material als Stabilisatoren Verbindungen der Formel I zusetzt bzw. auf diese aufbringt.

Da es oftmals nötig ist, einem Substrat mehrere Zusatzstoffe beizufügen, können Löslichkeitsprobleme auftreten. Dies betrifft insbesondere Anwendungen in Ölen und flüssigen Polymeren. Auch diesbezüglich zeigen die erfindungsgemäßen Verbindungen gute Eigenschaften.

Gegenstand der Erfindung sind auch neue Verbindungen gemäß Ansprüche 18-19.

Bevorzugt sind neue Verbindungen der Formel I, worin
R₁ Wasserstoff, C₁-C₁₂-Alkyl, Cyclohexyl, Phenyl, Benzyl, α-Methylbenzyl, α,α-Dimethylbenzyl oder eine Gruppe der Formel II darstellt,
X eine Gruppe >CHR₁₇ oder -S- ist,
p 0 bis 4 ist,
R'₁ C₁-C₁₂-Alkyl ist
R₂ Wasserstoff, C₁-C₈-Alkyl, Cyclohexyl, Benzyl, α-Methylbenzyl, α,α-Dimethylbenzyl oder Phenyl ist,
oder ein Rest der Formel III ist,
Y für -S- oder >CR₁₉R₂₀, >C(CH₃)-CH₂-CO-R₉ steht,
oder R₂ für einen Rest der Formel IV steht, Z = -O- oder -S- und d = 2 sind,
oder R₂ für -(CH₂)₂-CO-OR₁₀ steht,
R₃ Wasserstoff, C₁-C₈-Alkyl, Phenyl, -CO-R₈ oder
ein Rest der Formel V ist, worin R₁ Wasserstoff bedeutet,
x 2 bis 6 ist,
R₄ und R₅ unabhängig voneinander Wasserstoff, C₁-C₈-Alkyl, Phenyl, Benzyl, α-Methylbenzyl oder α,α-Dimethylbenzyl sind,
R₆ -NO₂, -C≡N, -COOR₁₃, -CO-R₁₆, -SO-R₁₄, -SO₂-R₁₄, oder Fluor ist,
R₈ C₁-C₈-Alkyl oder Phenyl,
R₉ C₁-C₁₈-Alkyl,
R₁₀ Wasserstoff oder C₁-C₁₈-Alkyl,
R₁₁ C₁-C₄-Alkyl,
R₁₃ C₁-C₁₂-Alkyl,
R₁₄ C₄-C₈-Alkyl oder Phenyl,
R₁₇ Wasserstoff, C₁-C₄-Alkyl oder Phenyl,
R₁₉ Wasserstoff oder C₁-C₄-Alkyl und
R₂₀ Wasserstoff oder C₁-C₄-Alkyl sind,
unter Ausschluß der Verbindungen gemäß Anspruch 18.

Bevorzugte Verbindungen der Formel I, wie vorstehend beschrieben, führen zu bevorzugten Zusammensetzungen.

Ein weiterer Gegenstand der Erfindung sind Verbindungen der anfangs beschriebenen Formel I, worin k 1 oder 2 ist.

Die Herstellung der erfindungsgemäßen Verbindungen sowie der in den erfindungsgemäßen Zusammensetzungen eingesetzten Phenylalkenylverbindungen erfolgt nach in der organischen Chemie geläufigen Methoden, beispielsweise nach den in A. Nishinage et al., J. Org Chem **51** 2257 (1986), und G. Casiraghi et al., Synthesis **1977**, 122 beschriebenen Verfahren:

Allgemein werden 4-Alkenyl-2,6-di-tert-butylphenole und 2-Alkenyl-4,6-di-tert-butylphenole beispielsweise nach A. Nishinage et al., J. Org. Chem. **51**, 2257 (1986) hergestellt: 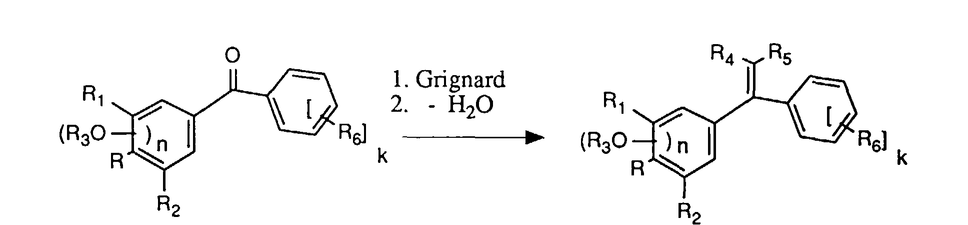 Die Carbonylgruppe wird dabei nach der Addition einer entsprechenden Grignardverbindung reduziert, wie experimentell im weiter unten angeführten Beispiel 4 beschrieben.

Wenn Q Phenyl oder substituiertes Phenyl ist, kann man auch folgendermaßen vorgehen (G. Casiraghi et al., Synthesis **1977**, 122):

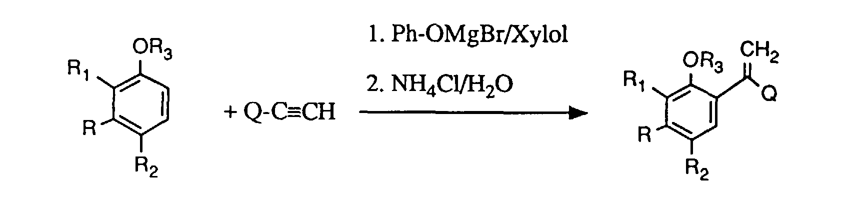

Ortho-Alkenylphenole sind auch nach der von G.Casiraghi et al., J.Chem.Soc. Perkin I. 2027 beschriebenen Methode über Aluminium-Phenoxide zugänglich.

Die Umsetzungen erfolgen zweckmäßig unter Zusatz von üblichen, unter den Reaktionsbedingungen inerten Lösungsmitteln. Die schwefelhaltigen Produkte können mit Oxidationsmitteln zu den entsprecheneden Sulfoxid- und Sulfon-Verbindungen oxidiert werden. Als Oxidationsmittel ist dafür z.B. m-Chlorperbenzoesäure geeignet.

Selbstverständlich können nach erfolgtem Ringaufbau Substituenten nach üblichen, in der organischen Chemie bekannten Verfahren ineinander umgewandelt bzw. eingeführt werden. Einige der beschriebenen Herstellungsverfahren sind in den nachfolgenden Beispielen ausführlich erläutert. Die für die oben beschriebenen Herstellungsverfahren benötigten Ausgangsverbindungen sind bekannt, kommerziell erhältlich, oder können in an sich bekannter Weise nach üblichen Methoden hergestellt werden.

Die nachfolgenden Beispiele erläutern die Erfindung weiter. Soweit nichts anderes angegeben ist, bedeuten darin sowie in der übrigen Beschreibung Teile- und Prozentangaben Gewichtsteile und Gewichtsprozent. Bei in den Beispielen angegebenen Strukturformeln wurde zumeist in üblicher Weise auf die Darstellung der Wasserstoffatome verzichtet, so daß " 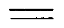 " für =CH₂, "―" für Methyl, 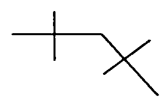 für tert-Octyl und " 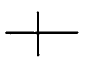 " für -tert-Butyl steht.

### Beispiel 1:

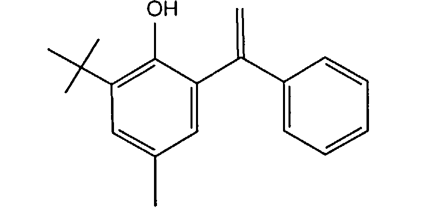

2.43 g (0.1 mol) Magnesium werden in 50 ml absolutem Diethylether bei Raumtemperatur vorgelegt. 10.9 ml (0.1 mol) Ethylbromid werden langsam während 30 Minuten zugetropft. Die Grignardreaktion verläuft exotherm, und es wird im Eisbad gekühlt. Zur leicht trüben Lösung werden während 30 Minuten 32.8 g (0.2 mol) 2-tert-Butyl-4-methyl-phenol unter Eisbadkühlung zugetropft. Es wird exotherm Ethan abgespalten. Nach 30 Minuten Nachreaktion werden 100 ml Xylol abs. zugegeben und unter gleichzeitigem Abdestillieren des Diethylethers auf 135-140°C geheizt. Nach der Zudosierung von 20.4g (0.2 mol) Phenylacetylen, wieder während 30 Minuten, wird 4 Stunden bei 140°C am Rückfluß belassen. Nach Abkühlung auf Raumtemperatur wird vorsichtig gesättigte Ammoniumchloridlösung zugegeben. Die organische Phase wird abgetrennt und über 10 g wasserfreiem Natriumsulfat getrocknet.
Nach Eindampfen unter vermindertem Druck erhält man 48.2 g eines leicht gelblichen Öls, das am Vakuum destilliert wird.
Ausbeute 36.2 g (68% d.Th.), farbloses Öl.
Sdp. 130-135 °C bei 10⁻² Torr (entspricht 1.33 kg m⁻¹s⁻²).

Analog Beispiel 1 werden die beiden folgenden Produkte erhalten:

### Beispiel 2: (Verbindung 2, Tabelle 1)

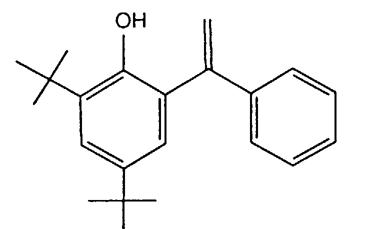

41.2 g 2,4 Di-tert-butylphenol ergeben 38.5 g (62.5% d.Th.) farbloses Öl.

### Beispiel 3: (Verbindung 3, Tabelle 1)

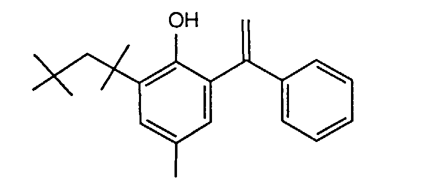

44.0 g 4-Methyl-2-tert-octylphenol ergeben 42.1 g (67.5% d.Th.) farbloses Öl.

### Beispiel 4: (Verbindung 4, Tabelle 1)

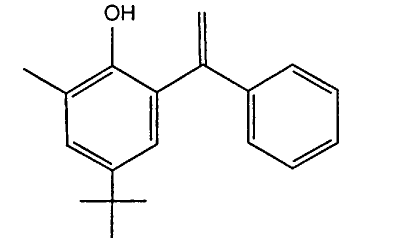

32.9 g (0.2 mol) 2-Methyl-4-tert-butyl-phenyl und 0.4 g (0.015 mol) Aluminium werden vorgelegt und auf 230°C aufgeheizt. Nach 15 Minuten setzt eine leichte Wasserstoffabspaltung ein. Nach einer Stunde wird die leicht trübe braune Schmelze auf ca. 100°C abgekühlt, mit 100 ml Xylol abs. versetzt und zum Rückfluß erhitzt. Nach Zudosierung einer Lösung von 24.0 g (0.2 mol) Acetophenon in 50 ml Xylol abs. während einer Stunde wird 16 Stunden lang am Rückfluß gekocht. Nach Abkühlen auf Raumtemperatur wird der Ansatz mit verdünnter Salzsäure leicht angesäuert, im Scheidetrichter mit dreimal 100 ml Wasser gewaschen, und die vereinigten organischen Phasen werden über 12 g wasserfreiem Natriumsulfat getrocknet und unter vermindertem Druck eingeengt. Nach Säulenchromatographie erhält man 11.2 g (21% d.Th.) eines farblosen Öls.

### Beispiel 5: (Verbindung 5, Tabelle 1)

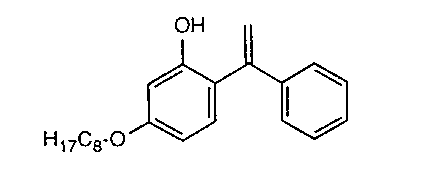

7. 3 g (0.3 mol) Magnesium werden in 200 ml Diethylether vorgelegt. Bei Raumtemperatur werden innerhalb einer Stunde unter Kühlung im Eisbad 42.6 g (0.3 mol) Methyliodid zugetropft. Die Reaktion verläuft exotherm. Nach 30 Minuten Nachreaktionszeit wird eine Lösung aus 32.5 g der Verbindung 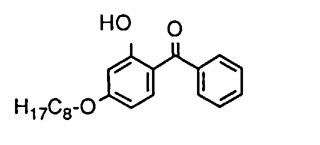 (erhältlich als Chimassorb® 81)
in 100 ml Diethylether innerhalb einer Stunde vorsichtig zugetropft. Die Methangasabspaltung verläuft exotherm. Nach einer Stunde Rühren werden 100 ml gesättigte Ammoniumchloridlösung zugetropft. Die organische Phase wird abgetrennt und über wasserfreiem Na₂SO₄ getrocknet. Nach Einengen bei vermindertem Druck verbleibt ein leicht gelbliches, klares Öl, das bei 20 mbar eine Stunde lang bei 120°C gehalten wird, wobei das entstandene Wasser abdestilliert.
Man erhält 31.4g (97% d.Th.) eines leicht gelblichen, klaren Öls.

Analog werden die beiden folgenden Produkte erhalten:

### Beispiel 6: (Verbindung 6, Tabelle 1)

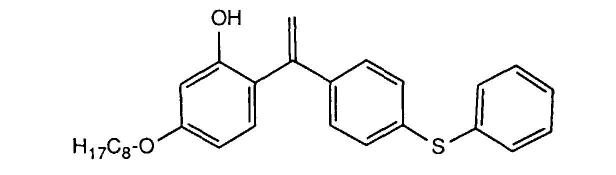

43.4 g der Verbindung 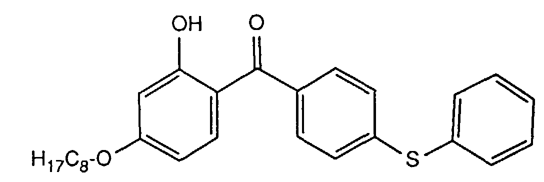 ergeben 42.7 g (99% d.Th.) eines leicht gelblichen Öls.

### Beispiel 7: (Verbindung 7, Tabelle 1)

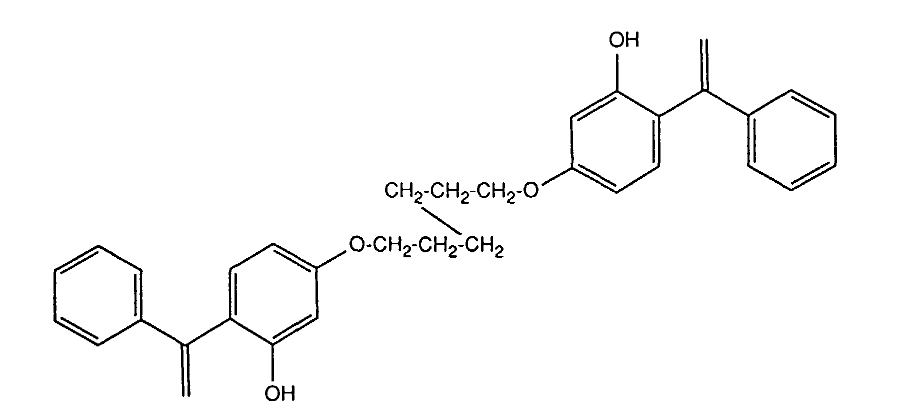

Die Umsetzung von 15.3 g (0.03 mol der als Seesorb® 1000 erhältlichen Verbindung 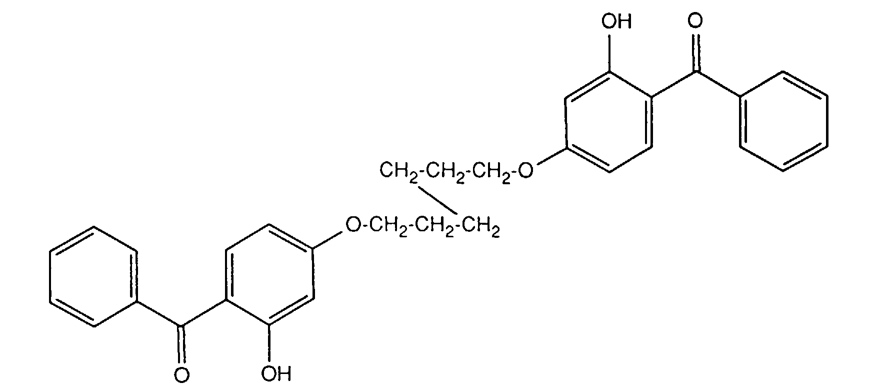 ergibt 15.0 (99% d.Th.) eines weißen Pulvers.

### Beispiel 8: (Verbindung 8, Tabelle 1)

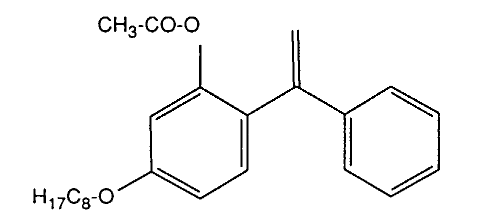

9.73 g (0.03 mol) der Verbindung aus Beispiel 5 und 3.34 g (0.033 mol) Triethylamin werden in 20 ml Toluol vorgelegt. Bei 0 bis 10°C werden 2.36 g (0.03 mol) Acetylchlorid binnen 30 Minuten zugetropft. Die Reaktion verläuft exotherm, und es fällt ein weißer Feststoff aus. Nach 3 Stunden Nachreaktionszeit bei Raumtemperatur wird der weiße Kristallbrei durch eine Nutsche abgesaugt und mit 30 ml Toluol nachgewaschen. Nach Eindampfen des Filtrats am Rotationsverdampfer erhält man ein praktisch farbloses Öl.
Ausbeute: 8.7 g (76% d.Th.), nahezu farbloses Öl.

### Beispiel 9

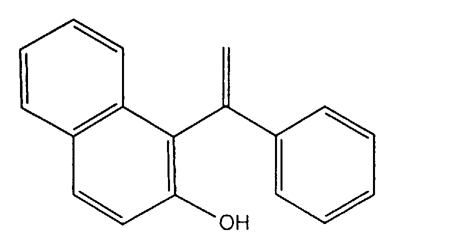

2.43 g (0.1 mol) Magnesium werden in 50 ml absolutem Diethylether bei Raumtemperatur vorgelegt. 12.3 ml (0.1 mol) 1-Brompropan werden während 30 Minuten zugetropft. Die Grignardreaktion verläuft exotherm, und es wird im Eisbad gekühlt. Zur leicht trüben Lösung werden während 30 Minuten 28.8 g (0.2 mol) 2-Naphthol, gelöst in 50 ml abs. Ether, zugetropft. Es wird exotherm Propan abgespalten. Nach 30 Minuten Nachreaktion werden eine Lösung aus 20.4 g (0.2 mol) Phenylacetylen in 100 ml Xylol abs. während 30 Minuten zusosiert. Unter gleichzeitigem Abdestillieren des Diethylethers wird auf 135-140°C geheizt und während 4 Stunden bei 140°C am Rückfluß belassen. Nach Abkühlung auf Raumtemperatur wird vorsichtig gesättigte Ammoniumchloridlösung zugegeben. Die organische Phase wird abgetrennt und über 10 g wasserfreiem Natriumsulfat getrocknet.
Nach Eindampfen unter vermindertem Druck erhält man 47 g eines braunen Öls, welches aus Hexan kristallisiert wird.
Ausbeute 22.6 g (46% d.Th.), leicht beiges Pulver
Smp. 103-108 °C

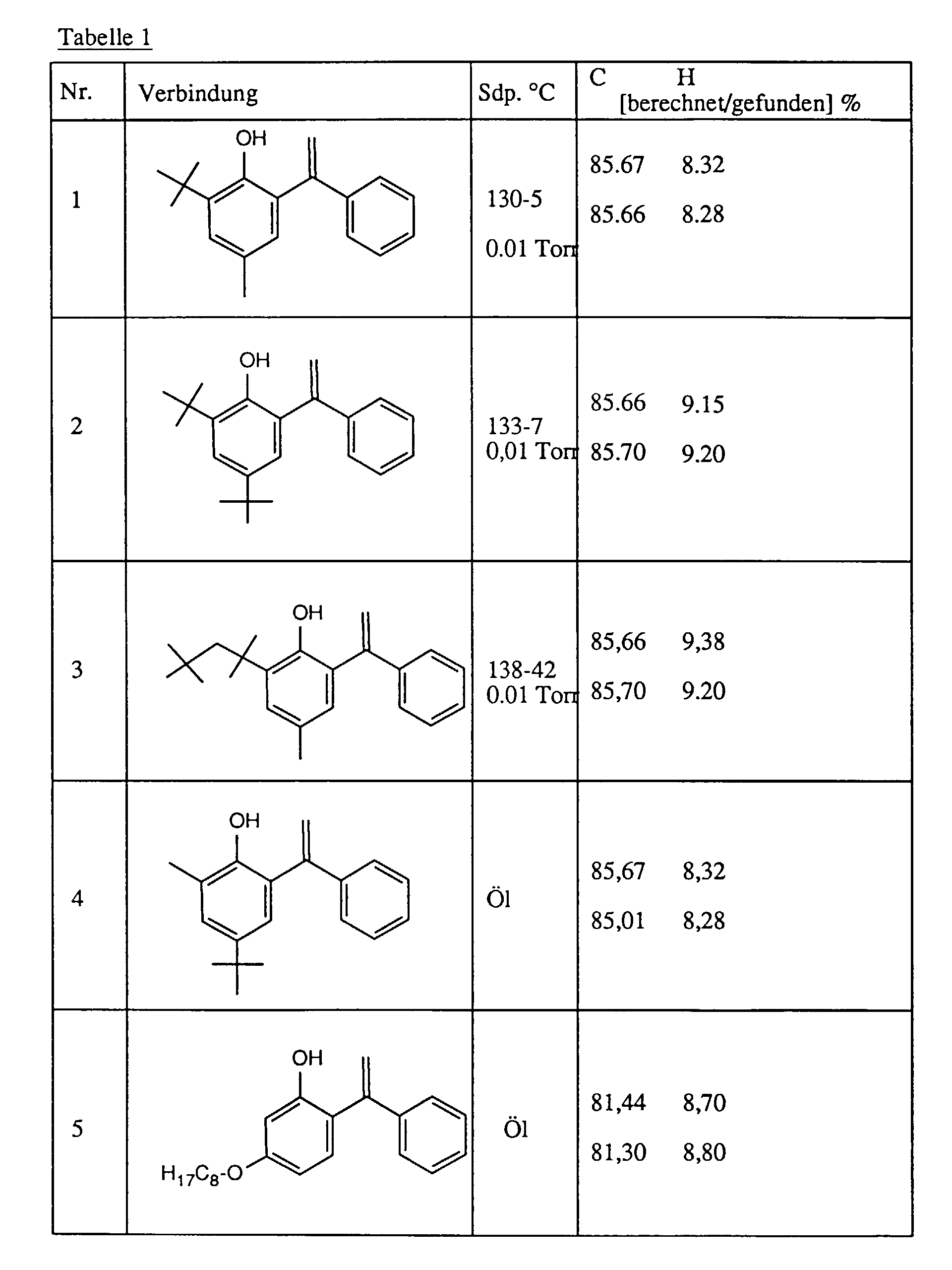

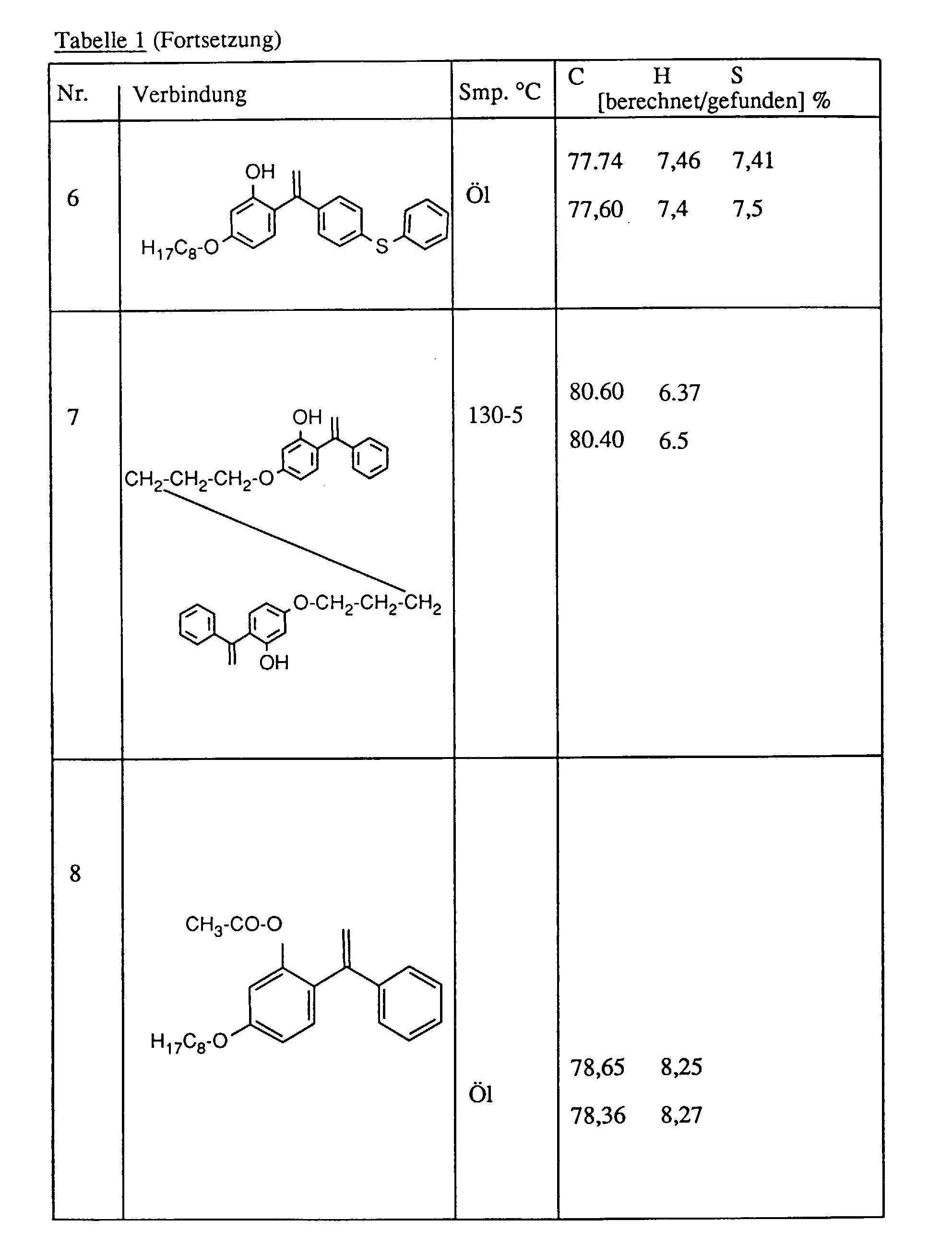

### Beispiel 10: Stabilisierung von Elastomeren: Brabender Test

Ein Styrol-Butadien-Styrol (SBS) Elastomer (®Finaprene 416) wird zu 0.25% mit dem jeweiligen Additiv versetzt und in einem Brabender Plastographen gealtert. Dazu werden die Mischungen in einem Brabender-Plastographen bei 200°C und 60 UpM geknetet. Während dieser Zeit wird der Knetwiderstand als Drehmoment kontinuierlich registriert. Infolge der Vernetzung des Polymeren erfolgt im Laufe der Knetzeit nach anfänglicher Konstanz eine rasche Zunahme des Drehmoments. Die Wirksamkeit der Stabilisatoren äußert sich in einer Verlängerung der Konstantzeit. Die erhaltenen Werte sind Tabelle 2 zu entnehmen.

**Tabelle 2:**

| Verbindung aus Beispiel | Zeit in min. bis zum Drehmomentanstieg |
|---|---|
| - | 6.1 |
| 4 | 12.2 |
| 1 | 10.3 |
| 2 | 11.1 |
| 5 | 12.2 |

### Beispiel 11: Stabilisierung von Polypropylen bei Mehrfachextrusion.

1,3 kg Polypropylenpulver (Profax 6501), das mit 0.025 % Irganox® 1076 (3-[3,5-di-tert.-butyl-4-hydroxyphenyl]propionsäure-n-octadecylester) vorstabilisiert wurde, (mit einem bei 230°C und mit 2,16 kg gemessenen Schmelzindex von 3.2) werden gemischt mit 0,05 % Irganox® 1010 (Pentaerythrit-tetrakis-[3-(3,5-di-tert.-butyl-4-hydroxyphenyl)-propionat), 0,05 % Calciumstearat, 0,03 % DHT 4A® (Kyowa Chemical Industry Co., Ltd., [Mg_{4.5}Al₂(OH)₁₃CO₃•3,5 H₂O]) und 0,015 % Verbindung aus Tabelle 1. Diese Mischung wird in einem Extruder mit einem Zylinderdurchmesser von 20 mm und einer Länge von 400 mm mit 100 Umdrehungen pro Minute extrudiert, wobei die 3 Heizzonen auf die folgenden Temperaturen eingestellt werden: 260, 270, 280°C. Das Extrudat wird zur Kühlung durch ein Wasserbad gezogen und anschliessend granuliert. Dieses Granulat wird wiederholt extrudiert. Nach 3 Extrusionen wird der Schmelzindex gemessen (bei 230°C mit 2,16 kg). Eine große Zunahme des Schmelzindex bedeutet starken Kettenabbau, also schlechte Stabilisierung. Die Resultate sind in Tabelle 3 zusammengefaßt.

**Tabelle 3:**

| Verbindung aus Tabelle 1 | Schmelzindex nach 3 Extrusionen |
|---|---|
| - | 17.1 |
| 1 | 7.4 |
| 2 | 7.1 |
| 3 | 7.2 |
| 7 | 10.2 |
| 6 | 8.6 |

## Patentansprüche

1. Zusammensetzung enthaltend ein thermischem, oxidativem und/oder actinischem Abbau unterliegendes organisches Material und mindestens eine Verbindung der Formel (I) 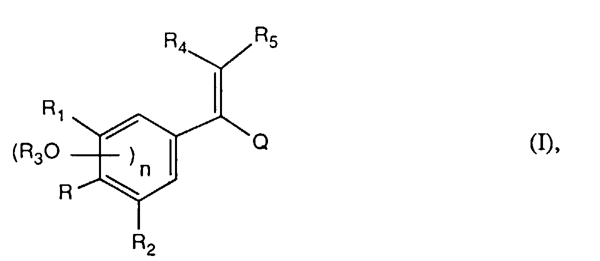 worin
Q einen Rest 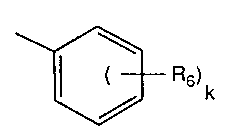 darstellt, wobei
n 1 oder 2 und k 0 , 1 oder 2 sind,
oder Q zusammen mit R₅ eine Gruppe 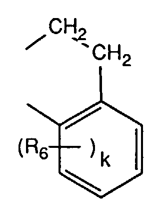 bildet und n 1 ist,
R Wasserstoff ist, dieselben Bedeutungsmöglichkeiten wie R₃O hat oder, wenn R₃ Wasserstoff und n 1 ist, zusammen mit R₁ oder mit R₂ eine Gruppe 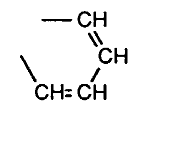 bildet,
R₁ Wasserstoff, C₁-C₁₈-Alkyl, C₅-C₁₂-Cycloalkyl, Phenyl, Benzyl, α-Methylbenzyl, α,α-Dimethylbenzyl oder Diphenylmethyl ist,
oder einen Rest der Formel 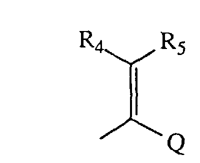 oder eine Gruppe der Formel 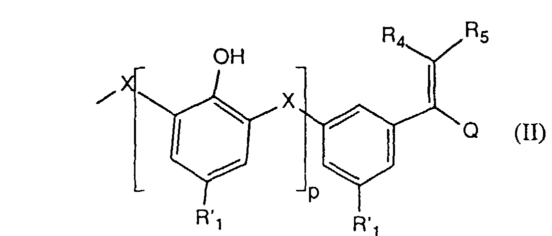 darstellt,
R'₁ C₁-C₁₈-Alkyl, Benzyl, α-Methylbenzyl oder α,α-Dimethylbenzyl ist,
X eine direkte Bindung oder eine Gruppe >CR₁₇R₁₈ oder (-S-)ₘ ist,
p 0 bis 8 und m 1 bis 3 sind,
R₂ Wasserstoff, C₁-C₁₈-Alkyl, Phenyl, C₅-C₁₂-Cycloalkyl, Benzyl, α-Methylbenzyl, α,α-Dimethylbenzyl oder Diphenylmethyl ist
oder eine Gruppe der Formel 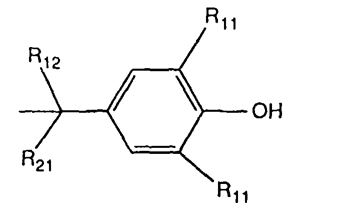 oder der Formel 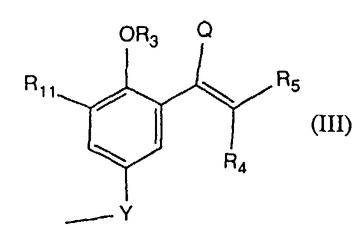 darstellt,
Y für >CR₁₉R₂₀, >S oder >C(CH₃)-(CH₂)_{q}-E-R₉ steht,
q 1 oder 2 ist und
E für CO-O oder O-CO steht,
oder R₂ C_{b}H_{2b}-D-R₁₀ und b 0 bis 3 ist,
D für CO-O, O-CO, NH-CO oder CO-NH steht,
oder R₂ einen Rest der Formel 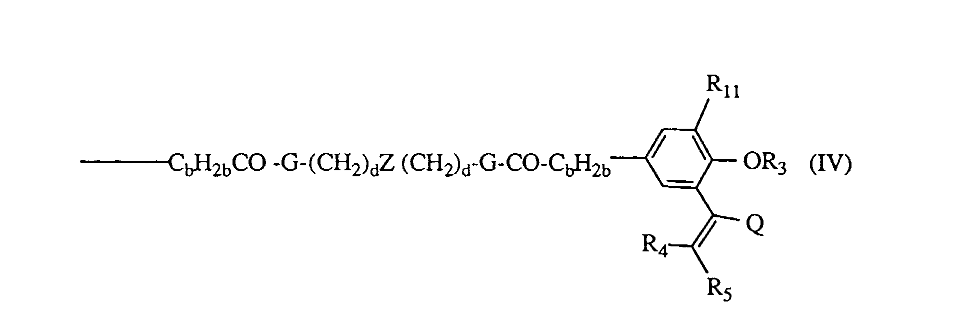 darstellt,
G für -O- oder >NH steht,
d 2 oder 3 ist,
Z eine direkte Bindung -O-, >NR₂₂ oder -S- ist,
oder R₂ eine Gruppe der Formel 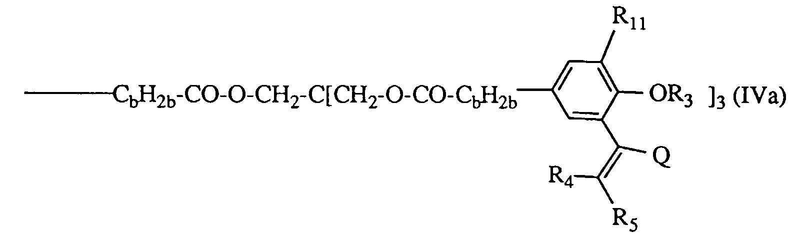 ist,
R₃ Wasserstoff, C₁-C₁₈-Alkyl, C₅-C₁₂-Cycloalkyl, Phenyl, Benzyl, α-Methylbenzyl, α,α-Dimethylbenzyl, Diphenylmethyl oder -CO-R₈,
oder eine Gruppe der Formel 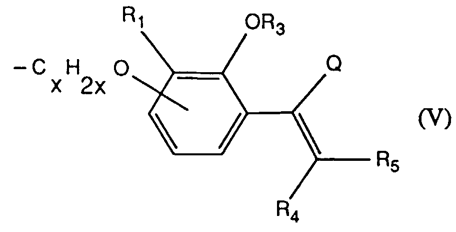 darstellt,
x 2 bis 10 ist,
R₄ und R₅ unabhängig voneinander Wasserstoff, C₁-C₁₂-Alkyl, C₅-C₁₂-Cycloalkyl, Phenyl, Benzyl, α-Methylbenzyl oder α,α-Dimethylbenzyl sind,
R₆ -NO₂, -C≡N, -COOR₁₃, -S-R₁₄, -SOR₁₄, -SO₂-R₁₄, -NR₇R₇ₐ, Cl, Br, F, -OR₁₅, oder -COR₁₆ ist, oder 2 Reste R₆ zusammen einen ankondensierten Benzoring bilden,
R₇ und R₇ₐ unabhängig voneinander Wasserstoff oder C₁-C₁₂-Alkyl sind,
R₈ Wasserstoff, C₁-C₁₈-Alkyl, Phenyl oder C₂-C₃-Alkenyl ist,
R₉ Wasserstoff, C₁-C₁₈-Alkyl oder eine Gruppe der Formel 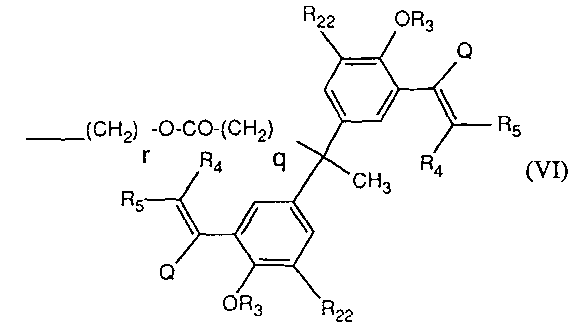 darstellt,
r für 2 bis 6 steht und q 1 oder 2 ist,
R₁₀ Wasserstoff oder C₁-C₁₈-Alkyl ist,
R₁₁ C₁-C₁₂-Alkyl, Phenyl, C₅-C₁₂-Cycloalkyl, Benzyl, α-Methylbenzyl oder α,α-Dimethylbenzyl ist,
R₁₂ Wasserstoff oder Methyl darstellt,
R₁₃ Wasserstoff oder C₁-C₁₈-Alkyl ist,
R₁₄ C₁-C₈-Alkyl oder Phenyl ist,
R₁₅ Wasserstoff, C₁-C₁₈-Alkyl, Phenyl, C₅-C₁₂-Cycloalkyl, Benzyl, α-Methylbenzyl oder α,α-Dimethylbenzyl ist,
R₁₆ C₁-C₁₈-Alkyl, Phenyl, C₅-C₆-Cycloalkyl, Acryloyl, Methacryloyl, Benzyl, α-Methylbenzyl oder α,α-Dimethylbenzyl ist,
R₁₇ und R₁₈ unabhängig voneinander Wasserstoff, C₁-C₁₈-Alkyl oder Phenyl sind,
R₁₉ Wasserstoff, C₁-C₁₈-Alkyl oder Phenyl ist,
R₂₀ Wasserstoff, C₁-C₁₈-Alkyl oder Phenyl ist,
R₂₁ Wasserstoff oder Methyl ist, und
R₂₂ Wasserstoff, C₁-C₁₈-Alkyl, C₅-C₁₂-Cycloalkyl oder Phenyl ist.

2. Zusammensetzung nach Anspruch **1**, worin
R₁ Wasserstoff, C₁-C₁₂-Alkyl, Cyclohexyl, Phenyl, Benzyl, α-Methylbenzyl, α,α-Dimethylbenzyl oder eine Gruppe der Formel II darstellt,
X eine Gruppe >CHR₁₇ oder -S- ist,
p 0 bis 4 ist,
R'₁ C₁-C₁₂-Alkyl ist
R₂ Wasserstoff, C₁-C₈-Alkyl, Cyclohexyl, Benzyl, α-Methylbenzyl, α,α-Dimethylbenzyl oder Phenyl ist,
oder ein Rest der Formel III ist,
Y für -S-, >CR₁₉R₂₀, oder >C(CH₃)-CH₂-CO-R₉ steht,
oder R₂ für einen Rest der Formel IV steht, Z = -O- oder -S- und d = 2 sind,
oder R₂ für -(CH₂)₂-CO-OR₁₀ steht,
R₃ Wasserstoff, C₁-C₈-Alkyl, Phenyl, -CO-R₈ oder
ein Rest der Formel V ist, worin R₁ Wasserstoff bedeutet,
R₄ und R₅ unabhängig voneinander Wasserstoff, C₁-C₈-Alkyl, Phenyl, Benzyl, α-Methylbenzyl oder α,α-Dimethylbenzyl sind,
R₆ -NO₂, -C≡N, -COOR₁₃, -CO-R₁₆, -SO-R₁₄, -SO₂-R₁₄ oder Fluor ist,
R₈ C₁-C₈-Alkyl oder Phenyl,
R₉ C₁-C₁₈-Alkyl,
R₁₀ Wasserstoff oder C₁-C₁₈-Alkyl,
R₁₁ C₁-C₄-Alkyl,
R₁₃ C₁-C₁₂-Alkyl,
R₁₄ C₄-C₈-Alkyl oder Phenyl,
R₁₇ Wasserstoff, C₁-C₄-Alkyl oder Phenyl,
R₁₉ Wasserstoff oder C₁-C₄-Alkyl und
R₂₀ Wasserstoff oder C₁-C₄-Alkyl sind.

3. Zusammensetzung nach Anspruch **1**, worin ein Rest R₃O in ortho-Position zur Alkenylgruppe zu finden ist.

4. Zusammensetzung nach Anspruch **1**, worin mindestens eine der Gruppen R₃O Hydroxy bedeutet.

5. Zusammensetzung nach Anspruch **1**, worin n 1 ist und R₃O für OH oder O-CO-CH₃ steht und in ortho-Position zur Alkenylgruppe steht.

6. Zusammensetzung nach Anspruch **1**, worin
R die gleichen Bedeutungsmöglichkeiten wie R₃O hat oder Wasserstoff ist,
R₁ Wasserstoff, C₁-C₁₂-Alkyl, Benzyl oder α-Methylbenzyl ist oder einem Rest der Formel 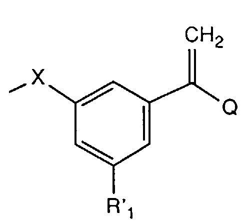 entspricht,
X -CH₂ oder -S- ist,
R'₁ C₁-C₄-Alkyl ist,
R₂ für H, C₁-C₈-Alkyl, Benzyl, α-Methylbenzyl oder einen Rest der Formel -(CH₂)₂-CO-OR₁₀ steht
R₁₀ C₁-C₁₈-Alkyl ist,
R₃ Wasserstoff, -CO-C₁-C₄-Alkyl oder C₁-C₁₈-Alkyl ist oder der Formel 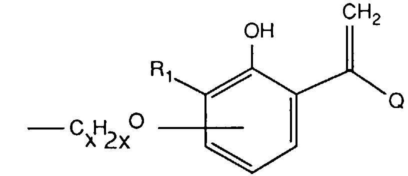 entspricht,
x 2 bis 6 ist, k 0 oder 1 ist,
R₄ Wasserstoff ist,
R₅ Wasserstoff, Ethyl, Methyl oder Benzyl ist, und
R₆ NO₂, S-Phenyl oder SO₂-Phenyl ist.

7. Zusammensetzung nach Anspruch **6**, worin
R für Wasserstoff, -O-C₁-C₁₂-Alkyl oder einen Rest der Formel 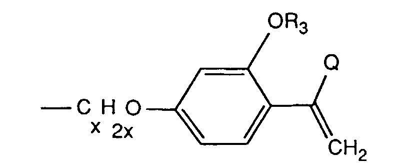 steht
R₁ Wasserstoff oder C₁-C₁₂-Alkyl ist,
R₂ Wasserstoff oder C₁-C₈-Alkyl ist,
R₄ und R₅ Wasserstoff sind,
n 1 ist,
R₃ für Wasserstoff oder -CO-C₁-C₁₂-Alkyl steht,
und die Gruppe -OR₃ sich in ortho-Position zur Alkenylgruppe befindet.

8. Zusammensetzung nach Anspruch 1, enthaltend mindestens eine Verbindung der Formel 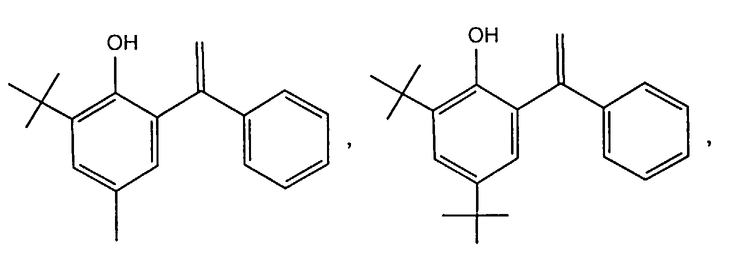 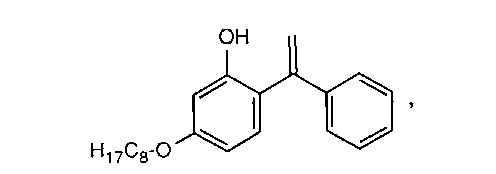 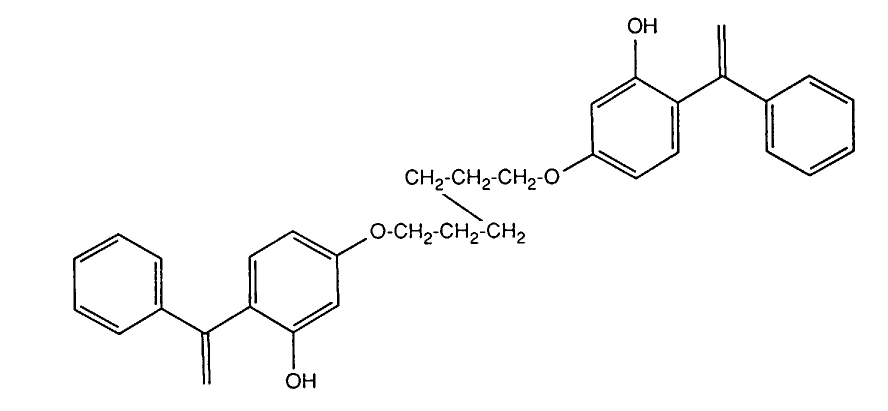 oder

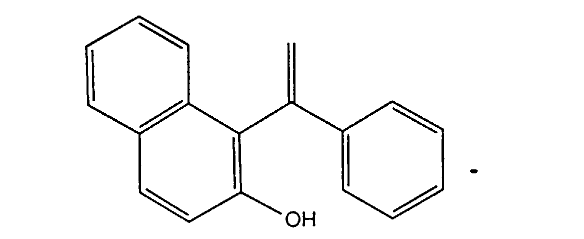

9. Zusammensetzung nach Anspruch **1**, worin das organische Material ein Schmierstoff, eine Metallbearbeitungsflüssigkeit, eine Hydraulikflüssigkeit oder ein natürliches oder (halb)synthetisches, insbesondere ein synthetisches, Polymer ist.

10. Zusammensetzung nach Anspruch **9**, worin das organische Material ein Schmierstoff ist.

11. Zusammensetzung nach Anspruch **9**, worin das organische Material ein thermoplastischer Kunststoff oder ein Elastomer ist.

12. Zusammensetzung nach Anspruch **11**, worin das organische Material ein Polyolefin ist.

13. Zusammensetzung nach Anspruch **1**, die zusätzlich weitere Stabilisatoren wie Antioxidantien, Lichtschutzmittel und Verarbeitungsstabilisatoren (Hitzestabilisatoren) enthält.

14. Verwendung von Verbindungen der Formel I gemäß Anspruch **1** zum Stabilisieren organischen Materials gegen oxidativen, thermischen und/oder actinischen Abbau.

15. Verwendung gemäß Anspruch **14** zum Stabilisieren von Schmierstoffen, Metallbearbeitungs- und Hydraulikflüssigkeiten sowie von synthetischen, natürlichen oder halbsynthetischen Polymeren.

16. Verfahren zum Stabilisieren organischen Materials, dadurch gekennzeichnet, dass man diesem Material als Stabilisatoren Verbindungen der Formel I gemäß Anspruch **1** zusetzt bzw. auf diese aufbringt.

17. Verfahren nach Anspruch **16** zum Stabilisieren von Schmierstoffen, Metallbearbeitungs- und Hydraulikflüssigkeiten sowie natürlichen, synthetischen oder halbsynthetischen Polymeren.

18. Verbindungen der Formel I gemäss Anspruch 1 unter Ausschluss der Verbindungen (I), worin mindestens einer der Reste R, R₁ und R₃ Wasserstoff, C₁-C₄-Alkyl oder C₁-C₄-Alkoxy, einer oder beide Reste R₄ und R₅ Wasserstoff oder C₁-C₄-Alkyl und Q Phenyl bedeuten.

19. Verbindungen der Formel I gemäss Anspruch 1, worin
R Wasserstoff, R₁ tert.-Octyl, R₂ Methyl, R₃, R₄ und R₅ Wasserstoff und Q Phenyl;
R die Gruppe H₁₇C₈-O-, R₁, R₂, R₃, R₄ und R₅ Wasserstoff und Q Phenyl;
R die Gruppe H₁₇C₈-O-, R₁, R₂, R₃, R₄ und R₅ Wasserstoff und Q die Gruppe 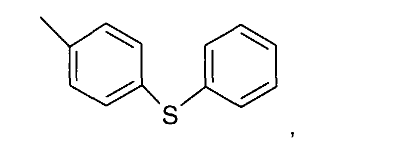
R die Gruppe 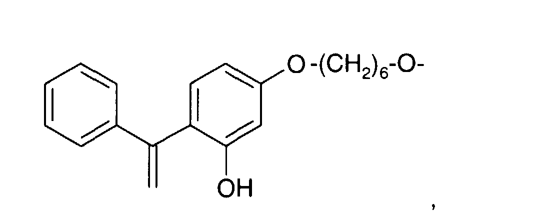
R₁, R₂, R₃, R₄ und R₅ Wasserstoff und Q Phenyl bedeuten,
oder
R die Gruppe H₁₇C₈-O-, R₁, R₂, R₄ und R₅ Wasserstoff, R₃ Acetoxy und Q Phenyl bedeuten.

## Claims

1. A composition comprising an organic material liable to thermal, oxidative and/or actinic degradation and at least one compound of formula (I) 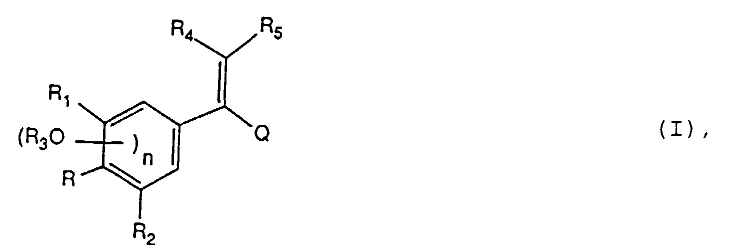 wherein
Q is a radical 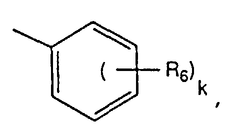 wherein
n is 1 or 2 and k is 0, 1 or 2,
or Q together with R₅ forms a group is 1, 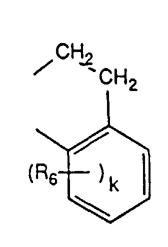 and n
R is hydrogen, has the same possible meanings as R₃O or, when R₃ is hydrogen and n is 1,
together with R₁ or with R₂ forms a group 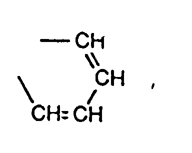 R₁ is hydrogen, C₁-C₁₈alkyl, C₅-C₁₂cycloalkyl, phenyl, benzyl, α-methylbenzyl, α,α-dimethylbenzyl or diphenylmethyl
or is a radical of the formula 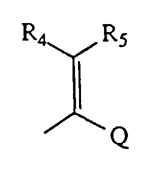 or a group of the formula 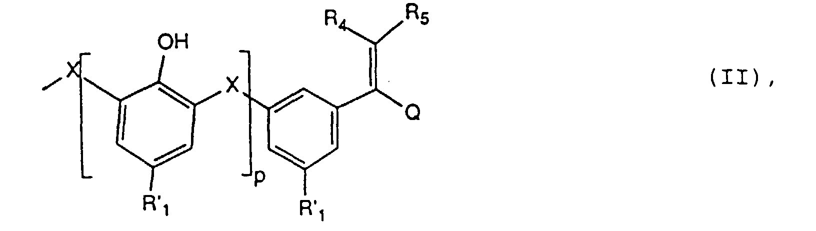
R'₁ is C₁-C₁₈alkyl, benzyl, α-methylbenzyl, or α,α-dimethylbenzyl,
X is a direct bond or a group >CR₁₇R₁₈ or (-S-)ₘ,
p is 0 to 8 and m is 1 to 3,
R₂ is hydrogen, C₁-C₁₈alkyl, phenyl, C₅-C₁₂cycloalkyl, benzyl, α-methylbenzyl, α,α-dimethylbenzyl or diphenylmethyl
or is a group of the formula 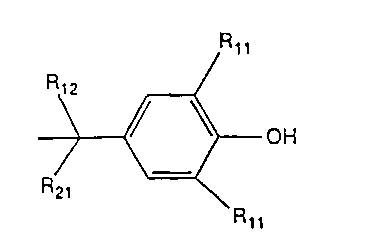 or of the formula 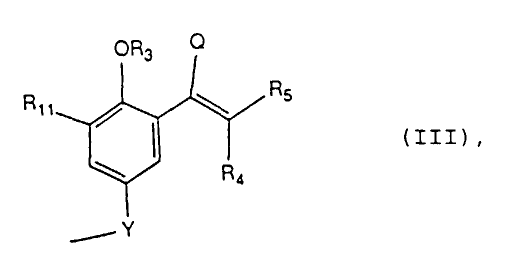
Y is >CR₁₉R₂₀, >S or >C(CH₃)-(CH₂)_{q}-E-R₉,
q is 1 or 2 and
E is CO-O or O-CO,
or R₂ is C_{b}H_{2b}-D-R₁₀ and b is 0 to 3,
D is CO-O, O-CO, NH-CO or CO-NH,
or R₂ is a radical of the formula 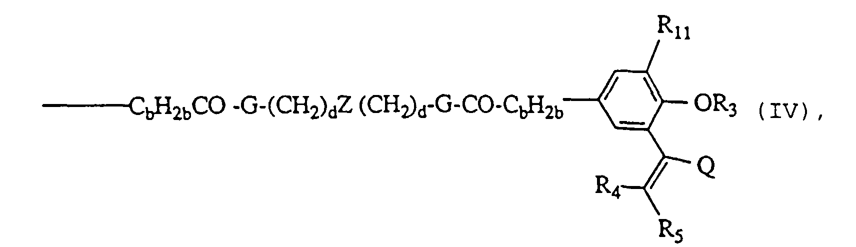
G is -O- or >NH,
d is 2 or 3,
Z is a direct bond, -O-, >NR₂₂ or -S-,
or R₂ is a group of formula IVa 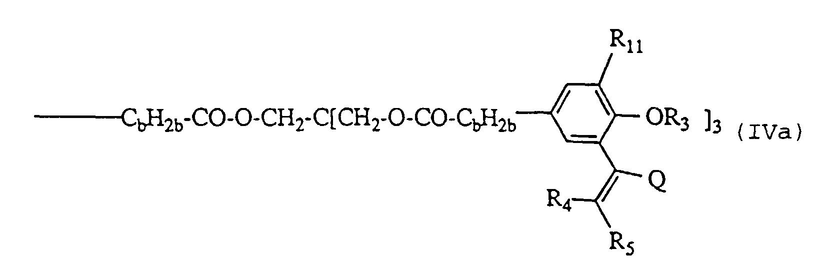
R₃ is hydrogen, C₁-C₁₈alkyl, C₅-C₁₂cycloalkyl, phenyl, benzyl, α-methylbenzyl, α,α-dimethylbenzyl, diphenylmethyl or -CO-R₈
or is the group of the formula 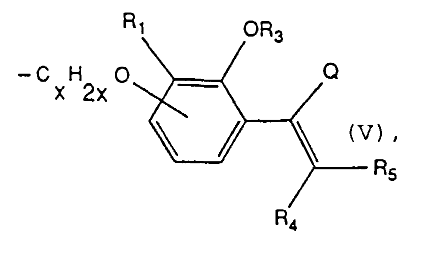
x is 2 to 10,
R₄ and R₅ are each independently of the other hydrogen, C₁-C₁₂alkyl, C₅-C₁₂cycloalkyl, phenyl, benzyl, α-methylbenzyl, α,α-dimethylbenzyl,
R₆ is -NO₂, -C≡N, -COOR₁₃, -S-R₁₄, -SOR₁₄, -SO₂-R₁₄, -NR₇R₇ₐ, Cl, Br, F, -OR₁₅ or -COR₁₆, or two radicals R₆ together form a fused-on benzo ring,
R₇ and R₇ₐ are each independently of the other hydrogen or C₁-C₁₂alkyl,
R₈ is hydrogen, C₁-C₁₈alkyl, phenyl or C₂-C₃alkenyl,
R₉ is hydrogen, C₁-C₁₈alkyl or a group of the formula 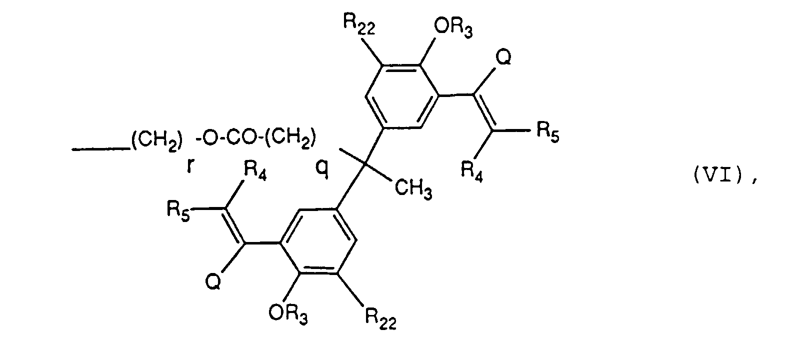
r is 2 to 6 and q is 1 or 2,
R₁₀ is hydrogen or C₁-C₁₈alkyl,
R₁₁ is C₁-C₁₂alkyl, phenyl, C₅-C₁₂cycloalkyl, benzyl, α-methylbenzyl or α,α-dimethylbenzyl,
R₁₂ is hydrogen or methyl,
R₁₃ is hydrogen or C₁-C₁₈alkyl,
R₁₄ is C₁-C₁₈alkyl or phenyl,
R₁₅ is hydrogen, C₁-C₁₈alkyl, phenyl, C₅-C₁₂cycloalkyl, benzyl, α-methylbenzyl or α,α-dimethylbenzyl,
R₁₆ is C₁-C₁₈alkyl, phenyl, C₅-C₆cycloalkyl, acryloyl, methacryloyl, benzyl, α-methylbenzyl or α,α-dimethylbenzyl,
R₁₇ and R₁₈ are each independently of the other hydrogen, C₁-C₁₈alkyl or phenyl,
R₁₉ is hydrogen, C₁-C₁₈alkyl or phenyl,
R₂₀ is hydrogen, C₁-C₁₈alkyl or phenyl,
R₂₁ is hydrogen or methyl and
R₂₂ is hydrogen, C₁-C₁₈alkyl, C₅-C₁₂cycloalkyl or phenyl.

2. A composition according to claim 1, wherein
R₁ is hydrogen, C₁-C₁₂alkyl, cyclohexyl, phenyl, benzyl, α-methylbenzyl, α,α-dimethylbenzyl or a group of formula II,
X is a group >CHR₁₇ or -S-,
p is 0 to 4,
R'₁ is C₁-C₁₂alkyl,
R₂ is hydrogen, C₁-C₈alkyl, cyclohexyl, benzyl, α-methylbenzyl, α,α-dimethylbenzyl or phenyl or is a radical of formula III,
Y is -S-, >CR₁₉R₂₀ or >C(CH₃)-CH₂-CO-R₉,
or R₂ is a radical of formula IV, Z = -O- or -S- and d = 2,
or R₂ is -(CH₂)₂-CO-OR₁₀,
R₃ is hydrogen, C₁-C₈alkyl, phenyl, -CO-R₈ or a radical of formula V wherein R₁ is hydrogen,
R₄ and R₅ are each independently of the other hydrogen, C₁-C₈alkyl, phenyl, benzyl, α-methylbenzyl or α,α-dimethylbenzyl,
R₆ is -NO₂, -C≡N, -COOR₁₃, -CO-R₁₆, -SO-R₁₄, -SO₂-R₁₄ or fluorine,
R₈ is C₁-C₈alkyl or phenyl,
R₉ is C₁-C₁₈alkyl,
R₁₀ is hydrogen or C₁-C₁₈alkyl,
R₁₁ is C₁-C₄alkyl,
R₁₃ is C₁-C₁₂alkyl,
R₁₄ is C₄-C₈alkyl or phenyl,
R₁₇ is hydrogen, C₁-C₄alkyl or phenyl,
R₁₉ is hydrogen or C₁-C₄alkyl and
R₂₀ is hydrogen or C₁-C₄alkyl.

3. A composition according to claim 1, wherein a radical R₃O is in the ortho-position to the alkenyl group.

4. A composition according to claim 1, wherein at least one of the groups R₃₀ is hydroxy.

5. A composition according to claim 1, wherein n is 1 and R₃₀ is OH or O-CO-CH₃ and is in the ortho-position to the alkenyl group.

6. A composition according to claim 1, wherein
R has the same possible meanings as R₃₀ or is hydrogen,
R₁ is hydrogen, C₁-C₁₂alkyl, benzyl or α-methylbenzyl or corresponds to a radical of the formula 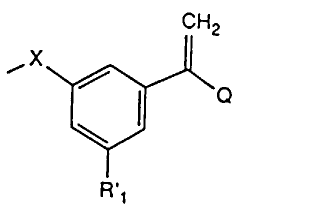
X is -CH₂ or -S-,
R'₁ is C₁-C₄alkyl,
R₂ is H, C₁-C₁₈alkyl, benzyl, α-methylbenzyl or a radical of the formula -(CH₂)₂-CO-OR₁₀,
R₁₀ is C₁-C₁₈alkyl,
R₃ is hydrogen, -CO-C₁-C₄alkyl or C₁-C₁₈alkyl or corresponds to the formula 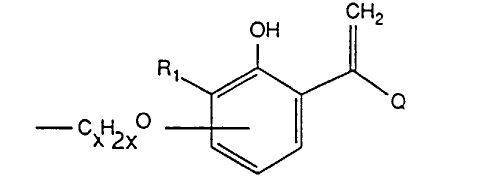
x is 2, k is 0 or 1,
R₄ is hydrogen,
R₅ is hydrogen, ethyl, methyl or benzyl and
R₆ is NO₂, S-phenyl or SO₂-Phenyl.

7. A composition according to claim 6, wherein
R is hydrogen, -O-C₁-C₁₂alkyl or a radical of the formula 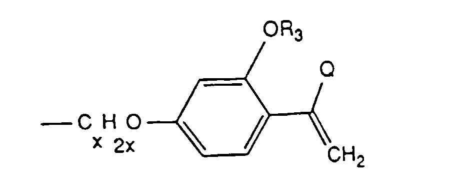
R₁ is hydrogen or C₁-C₁₂alkyl,
R₂ is hydrogen or C₁-C₈alkyl,
R₄ and R₅ are hydrogen,
n is 1,
R₃ is hydrogen or -CO-C₁-C₁₂alkyl
and the group -OR₃ is in the ortho-position to the alkenyl group.

8. A composition according to claim 1, comprising at least one compound of the formula 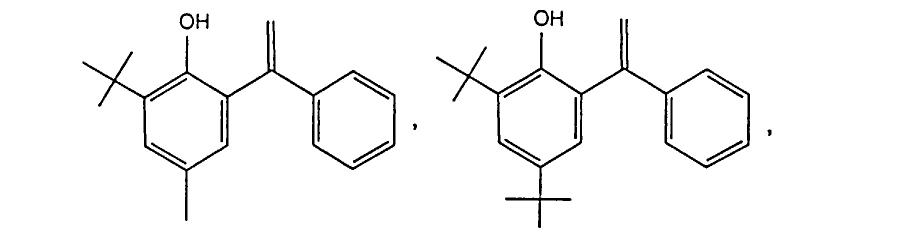 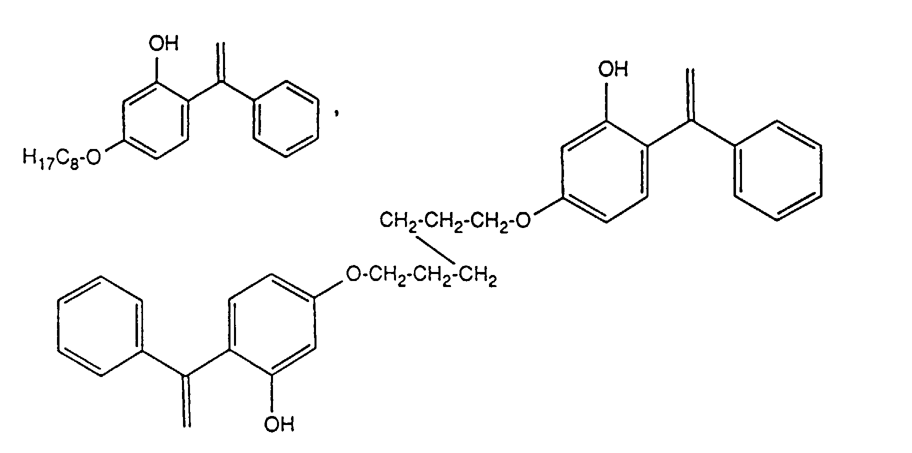 or

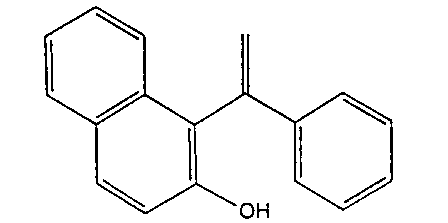

9. A composition according to claim 1, wherein the organic material is a lubricant, a metal-working fluid, a hydraulic fluid, or a natural or (semi-)synthetic, especially a synthetic, polymer.

10. A composition according to claim 9, wherein the organic material is a lubricant.

11. A composition according to claim 9, wherein the organic material is a thermoplastic or an elastomer.

12. A composition according to claim 11, wherein the organic material is a polyolefin.

13. A composition according to claim 1, which additionally comprises further stabilisers, such as antioxidants, light stabilisers and processing stabilisers (heat stabilisers).

14. The use of a compound of formula I according to claim 1 for stabilising organic material against oxidative, thermal and/or actinic degradation.

15. The use according to claim 14 for stabilising lubricants, metal-working fluids and hydraulic fluids and synthetic, natural or semi-synthetic polymers.

16. A method of stabilising organic material, which comprises adding a compound of formula I according to claim 1 to that material, or applying it thereto, as stabiliser.

17. A method according to claim 16 for stabilising lubricants, metal-working fluids and hydraulic fluids and synthetic, natural or semi-synthetic polymers.

18. A compound of formula I according to claim 1, with the exclusion of the compounds (I), wherein at least one of the radicals R, R₁ and R₃ is hydrogen, C₁-C₄alkyl or C₁-C₄alkoxy, one or both radicals R₄ and R₅ is or are hydrogen or C₁-C₄alkyl and Q is phenyl.

19. A compound of formula I according to claim 1 in which R is hydrogen, R₁ is tert-octyl, R₂ is methyl, R₃, R₄ and R₅ are hydrogen and Q is phenyl;
R is the group H₁₇C₈-O-, R₁, R₂, R₃, R₄ and R₅ are hydrogen and Q is phenyl;
R is the group H₁₇C₈-O-, R₁, R₂, R₃, R₄ and R₅ are hydrogen and Q is the group 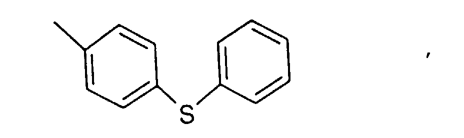
R is the group 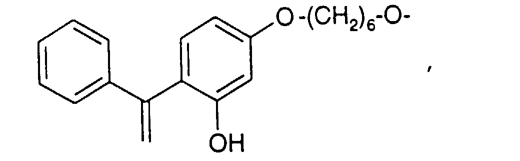
R₁, R₂, R₃, R₄ and R₅ are hydrogen and Q is phenyl, or
R is the group H₁₇C₈-O-, R₁, R₂, R₄ and R₅ are hydrogen,
R₃ is acetoxy and Q is phenyl.

## Revendications

1. Composition contenant un matériau organique soumis à une dégradation due à l'oxydation, thermique ou actinique et au moins un composé de formule (I) 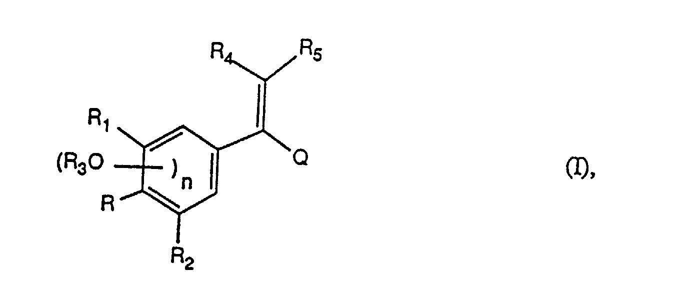 dans laquelle
Q représente un groupe 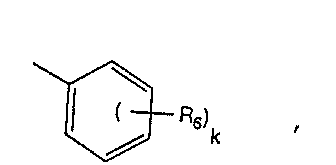
n étant 1 ou 2 et k 0, 1 ou 2, ou
Q forme avec R₅ un groupe 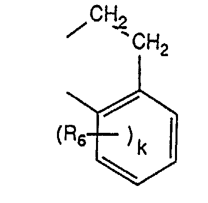 et n est 1,
R est un atome d'hydrogène, a les mêmes possibilités de représentation que R₃₀ ou, lorsque R₃ est un atome d'hydrogène et n = 1, forme ensemble avec R₁ ou avec R₂ un groupe 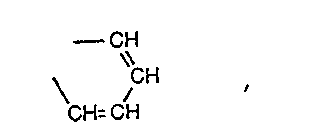
R₁ représente un atome d'hydrogène, un groupe alkyle en C₁-C₁₈, cycloalkyle en C₅-C₁₂, phényle, benzyle, α-méthylbenzyle, α,α-diméthylbenzyle ou diphénylméthyle, ou un groupe de formule 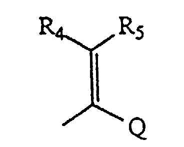 ou un groupe de formule 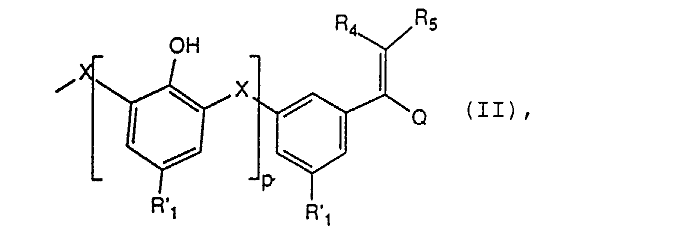
R'₁ représente un groupe alkyle en C₁-C₁₈, benzyle, α-méthylbenzyle ou α,α-diméthylbenzyle,
X est une simple liaison ou un groupe >CR₁₇R₁₈ ou (-S-)ₘ,
p représente 0 à 8 et m 1 à 3,
R₂ représente un atome d'hydrogène, un groupe alkyle en C₁-C₁₈, phényle, cycloalkyle en C₅-C₁₂, benzyle, α-méthylbenzyle, α,α-diméthylbenzyle ou diphénylméthyle
ou représente un groupe de formule 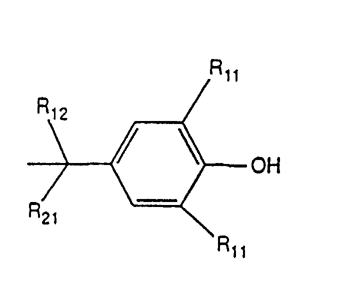 ou de formule 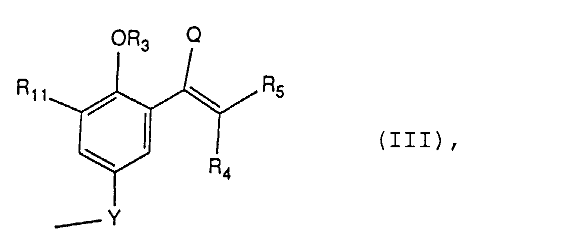
Y représente >CR₁₉R₂₀, >S ou >C(CH₃)-(CH₂)_{q}-ER₉,
q est 1 ou 2 et
E représente CO-O ou O-CO,
ou R₂ représente C_{b}H_{2b}-D-R₁₀ et b est 0 à 3,
D représente CO-O, O-CO, NH-CO ou CO-NH,
ou R₂ représente un groupe de formule 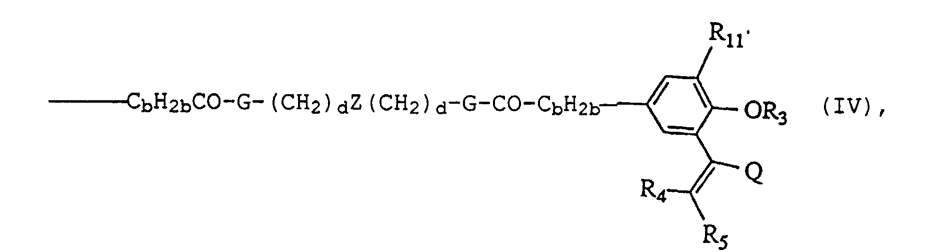
G représente -O- ou >NH,
d est 0 ou 3,
Z une simple liaison, -O-, >NR₂₂ ou S,
ou R₂ représente un groupe de formule 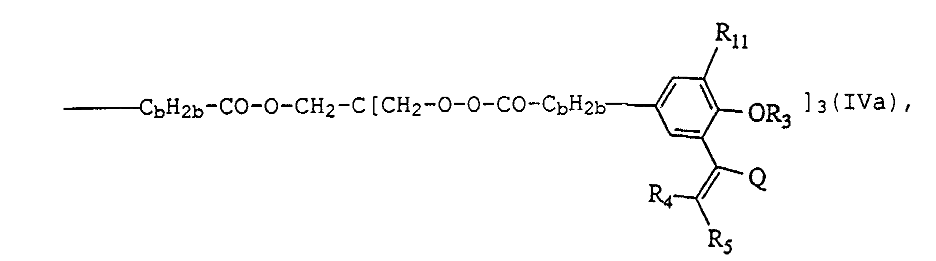
R₃ représente un atome d'hydrogène, un groupe alkyle en C₁-C₁₈, cycloalkyle en C₅-C₁₂, phényle, benzyle, α-méthylbenzyle, α,α-diméthylbenzyle ou diphénylméthyle ou -CO-R₈,
ou un groupe de formule 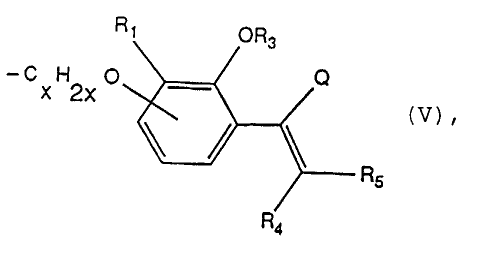
x est 2 à 10,
R₁ et R₅ sont indépendamment l'un de l'autre un atome d'hydrogène, un groupe alkyle en C₁-C₁₂, cycloalkyle en C₅-C₁₂, phényle, benzyle, α-méthylbenzyle ou α,α-diméthylbenzyle,
R₆ est -NO₂, -C≡N, -COOR₁₃, -S-R₁₄, -SOR₁₄, -SO₂-R₁₄, -NR₇R₇ₐ, Cl, Br, F, -OR₁₅ ou -COR₁₆, ou 2 groupes R₆ forment ensemble un cycle benzoïque condensé,
R₇ et R₇ₐ sont indépendamment l'un de l'autre un atome d'hydrogène ou un groupe alkyle en C₁-C₁₂,
R₈ est un atome d'hydrogène, un groupe alkyle en C₁-C₁₈, cycloalkyle en C₅-C₁₂, phényle, ou alcényle en C₂-C₃,
R₉ représente un atome d'hydrogène, un groupe alkyle en C₁-C₁₈ ou un groupe de formule 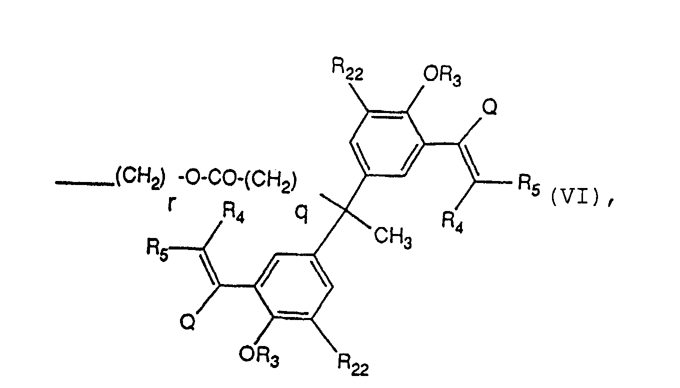
r représente 2 à 6 et q est 1 ou 2,
R₁₀ représente un atome d'hydrogène ou un groupe alkyle en C₁-C₁₈,
R₁₁ représente un groupe alkyle en C₁-C₁₂, phényle, cycloalkyle en C₅-C₁₂, benzyle, α-méthylbenzyle ou α,α-diméthylbenzyle,
R₁₂ représente un atome d'hydrogène ou un groupe méthyle,
R₁₃ représente un atome d'hydrogène ou un groupe alkyle en C₁-C₁₈,
R₁₄ représente un groupe alkyle en C₁-C₈ ou phényle,
R₁₅ représente un atome d'hydrogène, un groupe alkyle en C₁-C₁₈, phényle, cycloalkyle en C₅-C₁₂, benzyle, α-méthylbenzyle ou α,α-diméthylbenzyle,
R₁₆ représente un groupe alkyle en C₁-C₁₈, phényle, cycloalkyle en C₅-C₆, acryloyle, méthacryloyle, benzyle, α-méthylbenzyle ou α,α-diméthylbenzyle,
R₁₇ et R₁₈ représentent indépendamment l'un de l'autre un atome d'hydrogène, un groupe alkyle en C₁-C₁₈ ou phényle,
R₁₉ représente un atome d'hydrogène, un groupe alkyle en C₁-C₁₈ ou phényle,
R₂₀ représente un atome d'hydrogène, un groupe alkyle en C₁-C₁₈ ou phényle,
R₂₁ représente un atome d'hydrogène ou un groupe méthyle, et
R₂₂ représente un atome d'hydrogène, un groupe alkyle en C₁-C₁₈, cycloalkyle en C₅-C₁₂ ou phényle.

2. Composition selon la revendication 1, dans laquelle
R₁ représente un atome d'hydrogène, un groupe alkyle en C₁-C₁₂, cyclohexyle, phényle, benzyle, α-méthylbenzyle ou α,α-diméthylbenzyle ou un groupe de formule II,
X est un groupe >CHR₁₇ ou -S-,
p représente 0 à 4,
R'₁ est un groupe alkyle en C₁-C₁₂,
R₂ représente un atome d'hydrogène, un groupe alkyle en C₁-C₈, cyclohexyle, benzyle, α-méthylbenzyle, α,α-diméthylbenzyle ou phényle,
ou est un groupe de formule III,
Y représente -S- ou >CR₁₉R₂₀, >C(CH₃)-CH₂-CO-R₉,
ou R₂ représente un groupe de formule IV, Z = -O- ou -S-et d = 2,
ou R₂ représente -(CH₂)₂-CO-O-R₁₀,
R₃ représente un atome d'hydrogène, un groupe alkyle en C₁-C₈, phényle, -CO-R₈ ou un groupe de formule V dans laquelle R₁ représente un atome d'hydrogène,
R₄ et R₅ sont indépendamment l'un de l'autre un atome d'hydrogène, un groupe alkyle en C₁-C₈, phényle, benzyle, α-méthylbenzyle ou α,α-diméthylbenzyle,
R₆ est -NO₂, -C≡N, -COOR₁₃, -SOR₁₄, -SO₂-R₁₄ ou un atome de fluor,
R₈ est un groupe alkyle en C₁-C₈ ou phényle,
R₉ représente un groupe alkyle en C₁-C₁₈,
R₁₀ représente un atome d'hydrogène ou un groupe alkyle en C₁-C₁₈,
R₁₁ représente un groupe alkyle en C₁-C₄,
R₁₃ représente un groupe alkyle en C₁-C₁₂,
R₁₄ représente un groupe alkyle en C₄-C₈ ou phényle,
R₁₇ représente un atome d'hydrogène, un groupe alkyle en C₁-C₄ ou phényle,
R₁₉ représente un atome d'hydrogène ou un groupe alkyle en C₁-C₄ et
R₂₀ représente un atome d'hydrogène ou un groupe alkyle en C₁-C₄.

3. Composition selon la revendication 1, dans laquelle on trouve un groupe R₃₀ en position ortho par rapport au groupe alcényle.

4. Composition selon la revendication 1, dans laquelle un des groupes R₃₀ représente un groupe hydroxy.

5. Composition selon la revendication 1, dans laquelle n est 1 et R₃₀ représente un groupe hydroxy ou O-CO-CH₃ et se trouve en position ortho par rapport au groupe alcényle.

6. Composition selon la revendication 1, dans laquelle
R a les mêmes possibilités de signification que R₃₀ ou est un atome d'hydrogène,
R₁ représente un atome d'hydrogène, un groupe alkyle en C₁-C₁₂, benzyle ou α-méthylbenzyle ou un groupe de formule 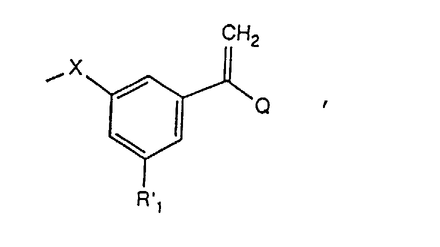
X est -CH₂ ou -S-,
R'₁ est un groupe alkyle en C₁-C₄,
R₂ représente H, un groupe alkyle en C₁-C₈, benzyle, α-méthylbenzyle ou un groupe de formule -(CH₂)₂-CO-O-R₁₀
R₁₀ est un groupe alkyle en C₁-C₁₈,
R₃ représente un atome d'hydrogène, un groupe CO-alkyle en C₁-C₄ ou alkyle en C₁-C₁₈ ou correspond à la formule 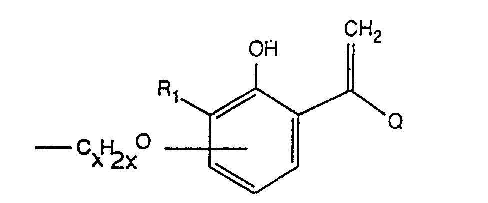
X est 2 à 6, k est 0 ou 1,
R₄ est un atome d'hydrogène,
R₅ est un atome d'hydrogène, un groupe éthyle, méthyle ou benzyle, et
R₆ est NO₂, S-phényle ou SO₂-phényle.

7. Composition selon la revendication 6, dans laquelle
R représente un atome d'hydrogène, un groupe -O-alkyle en C₁-C₁₂ ou un groupe de formule 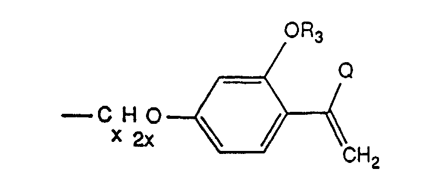
R₁ représente un atome d'hydrogène ou un groupe alkyle en C₁-C₁₂,
R₂ représente un atome d'hydrogène ou un groupe alkyle en C₁-C₈,
R₄ et R₅ représentent des atomes d'hydrogène,
n est 1,
R₃ représente un atome d'hydrogène ou un groupe -CO-alkyle en C₁-C₁₂,
et le groupe -OR₃ se trouve en position ortho par rapport au groupe alcényle..

8. Composition selon la revendication 1, contenant au moins un composé de formule 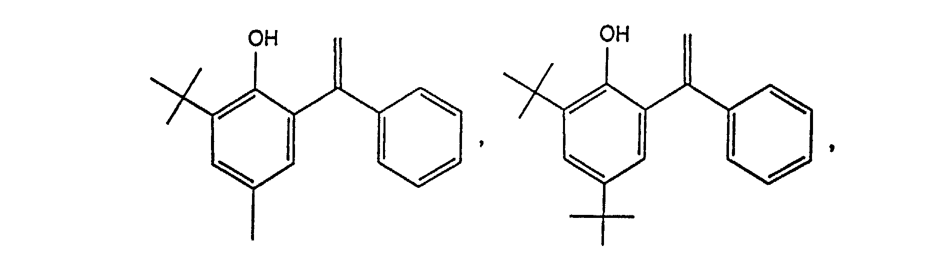 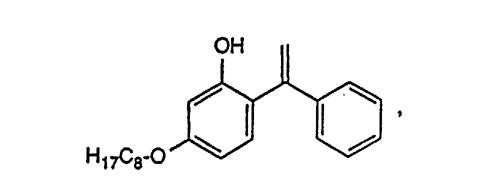 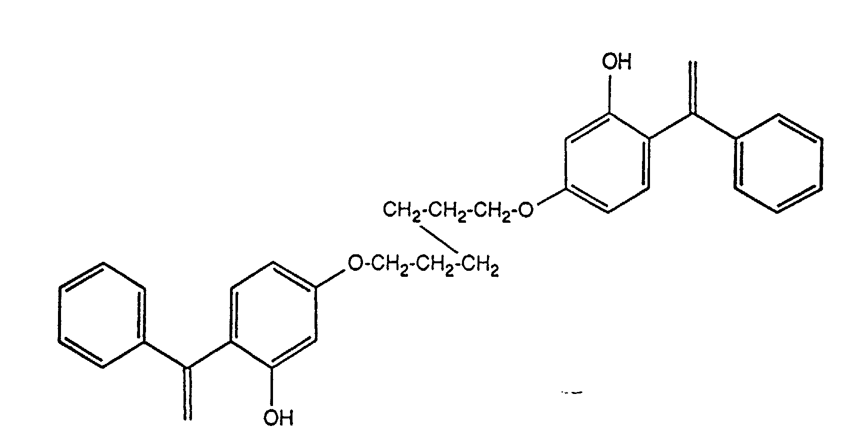 ou

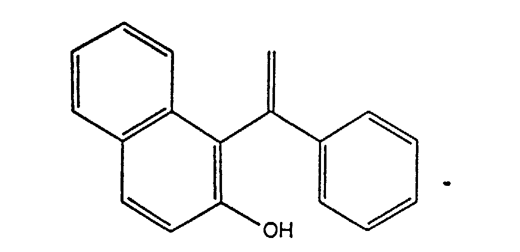

9. Composition selon la revendication 1, dans laquelle le matériau organique est un lubrifiant, un fluide d'usinage des métaux, un fluide hydraulique ou un polymère naturel ou (semi)synthétique, en particulier un polymère synthétique.

10. Composition selon la revendication 9, dans laquelle le matériau organique est un lubrifiant.

11. Composition selon la revendication 9, dans laquelle le matériau organique est une matière plastique thermoplastique ou un élastomère.

12. Composition selon la revendication 11, dans laquelle le matériau organique est une polyoléfine.

13. Composition selon la revendication 1, qui contient en plus d'autres stabilisants tels que des antioxydants, des agents de protection contre la lumière et des stabilisants de transformation (stabilisants thermiques).

14. Utilisation de composés selon la revendication 1 pour la stabilisation d'un matériau organique contre une dégradation due à l'oxydation, thermique et/ou actinique.

15. Utilisation selon la revendication 14 pour la stabilisation de lubrifiants, de fluides hydrauliques et d'usinage des métaux ainsi que de polymères synthétiques, naturels ou semisynthétiques.

16. Procédé pour la stabilisation d'un matériau organique, caractérisé en ce qu'on ajoute à ce matériau ou on applique sur celui-ci comme stabilisants des composés de formule I selon la revendication 1.

17. Procédé selon la revendication 16 pour la stabilisation de lubrifiants, de fluides hydrauliques et d'usinage des métaux ainsi que de polymères naturels, synthétiques, ou semisynthétiques.

18. Composés de formule I selon la revendication 1 à l'exclusion des composés (I), dans lesquels au moins un des groupes R, R₁ et R₃ représente un atome d'hydrogène, un groupe alkyle en C₁-C₄ ou alcoxy en C₁-C₄, un ou les deux groupes R₄ et R₅ représentent un atome d'hydrogène ou un groupe alkyle en C₁-C₄ et Q un groupe phényle.

19. Composés de formule I selon la revendication 1, dans lesquels
R représente un atome d'hydrogène, R₁ un groupe tert.-octyle, R₂ méthyle, R₃, R₄ et R₅ un atome d'hydrogène et Q un groupe phényle;
R représente le groupe H₁₇C₈-O-, R₁, R₂, R₃, R₄ et R₅ un atome d'hydrogène et Q un groupe phényle;
R représente le groupe H₁₇C₈-O-, R₁, R₂, R₃, R₄ et R₅ un atome d'hydrogène et Q le groupe 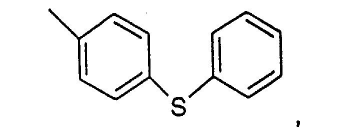
R représente le groupe 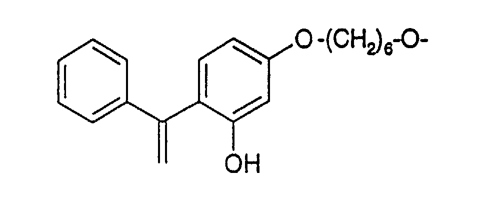
R₁, R₂, R₃, R₄ et R₅ un atome d'hydrogène et Q un groupe phényle,
ou
R représente le groupe H₁₇C₈-O-, R₁, R₂, R₄ et R₅ un atome d'hydrogène, R₃ un groupe acétoxy et Q un groupe phényle.
